# FASCICULE DE BREVET EUROPEEN

(11) **EP 3 390 115 B1**
(45) Date de publication et mention de la délivrance du brevet: **26.02.2020**
(21) Numéro de dépôt: 16825850.7
(22) Date de dépôt: 15.12.2016
(51) Int. Cl.: B60C 17/04, B60C 17/06, B60C 7/12, B60C 7/14

(54) **ASSEMBLAGE POUR PNEUMATIQUE COMPRENANT DES TISSU(S) OU TRICOT(S) COMPRENANT DES ÉLÉMENTS FILAIRES PRÉ-ENCOLLÉS**
ANORDNUNG FÜR EINEN REIFEN MIT WEB- ODER STRICKSTOFF(EN) MIT VORGEKLEBTEN DRAHTELEMENTEN
ASSEMBLY INTENDED FOR A TIRE INCLUDING WOVEN OR KNITTED FABRIC(S) INCLUDING PRE-ADHERED WIRE ELEMENTS

(30) Priorité: 17.12.2015 FR 1562630
(43) Date de publication de la demande: 24.10.2018
(73) Titulaire: Compagnie Générale des Etablissements Michelin, 63000 Clermont-Ferrand (FR)
(72) Inventeur: RIGO, Sébastien, 63040 Clermont-Ferrand Cedex 9 (FR); VILCOT, Florian, 63040 Clermont-Ferrand Cedex 9 (FR); DAJOUX, Nicole, 63040 Clermont-Ferrand Cedex 9 (FR); BROUSSEAU, Magaly, 63040 Clermont-Ferrand Cedex 9 (FR)
(74) Mandataire: Louret, Sylvain
(86) Numéro de dépôt international: PCT/FR2016/053450
(87) Numéro de publication internationale: WO 2017/103491

(56) Documents cités:
- WO-A1-2017/005713
- CN-A- 101 318 450
- US-A- 1 426 763
- US-A- 2 506 861
- US-A- 4 157 107

## Description

L'invention a pour objet un assemblage pour pneumatique, un pneumatique, un procédé de fabrication d'un assemblage pour pneumatique et un procédé de fabrication d'un pneumatique.

L'invention concerne le domaine des pneumatiques destinés à équiper des véhicules. Le pneumatique est conçu préférentiellement pour des véhicules de tourisme, mais peut être utilisé sur tout autre type de véhicule tels que des véhicules à deux roues, des véhicules poids lourds, agricoles, de génie civil ou des avions ou, plus généralement, sur tout dispositif roulant.

Un pneumatique classique est une structure torique, destinée à être montée sur une jante, pressurisée par un gaz de gonflage et écrasée sur un sol sous l'action d'une charge. Le pneumatique possède en tout point de sa surface de roulement, destinée à entrer en contact avec un sol, une double courbure: une courbure circonférentielle et une courbure méridienne. Par courbure circonférentielle, on entend une courbure dans un plan circonférentiel, défini par une direction circonférentielle, tangente à la surface de roulement du pneumatique selon la direction de roulement du pneumatique, et une direction radiale, perpendiculaire à l'axe de rotation du pneumatique. Par courbure méridienne, on entend une courbure dans un plan méridien ou radial, défini par une direction axiale, parallèle à l'axe de rotation du pneumatique, et une direction radiale, perpendiculaire à l'axe de rotation du pneumatique.

Dans ce qui suit, l'expression «radialement intérieur, respectivement radialement extérieur» signifie «plus proche, respectivement plus éloigné de l'axe de rotation du pneumatique». L'expression «axialement intérieur, respectivement axialement extérieur» signifie «plus proche, respectivement plus éloigné du plan équatorial du pneumatique», le plan équatorial du pneumatique étant le plan passant par le milieu de la surface de roulement du pneumatique et perpendiculaire à l'axe de rotation du pneumatique.

Il est connu que la mise à plat du pneumatique sur un sol horizontal, dans un plan circonférentiel et dans un plan méridien, est conditionnée par les valeurs des rayons de courbure respectivement circonférentiel et méridien, au niveau des points de la surface de roulement positionnés aux limites de l'aire de contact du pneumatique avec le sol. Cette mise à plat est d'autant plus facilitée que ces rayons de courbure sont grands, c'est-à-dire que les courbures sont petites, la courbure en un point, au sens mathématique, étant l'inverse du rayon de courbure. Il est également connu que la mise à plat du pneumatique impacte les performances du pneumatique, en particulier la résistance au roulement, l'adhérence, l'usure et le bruit.

Par conséquent, l'homme du métier, spécialiste du pneumatique, cherchant à obtenir le bon compromis entre les performances attendues du pneumatique telles que, de façon non exhaustive, l'usure, l'adhérence, l'endurance, la résistance au roulement et le bruit, a développé des solutions alternatives au pneumatique classique pour optimiser sa mise à plat.

Un pneumatique classique de l'état de la technique a généralement une grande courbure méridienne, c'est-à-dire un petit rayon de courbure méridien, au niveau des extrémités axiales de la bande de roulement, appelées épaules, lorsque le pneumatique, monté sur sa jante de montage et gonflé à sa pression d'utilisation recommandée, est soumis à sa charge de service. La jante de montage, la pression d'utilisation et la charge de service sont définies par des normes, telles que, par exemple, les normes de la European Tyre and Rim Technical Organisation (ETRTO).

Un pneumatique classique porte la charge appliquée, essentiellement par les extrémités axiales de la bande de roulement, ou épaules, et par les flancs reliant la bande roulement à des bourrelets assurant la liaison mécanique du pneumatique avec sa jante de montage. Il est connu qu'une mise à plat méridienne d'un pneumatique classique, avec une petite courbure méridienne au niveau des épaules, est généralement difficile à obtenir.

Le document US 4235270 décrit un pneumatique ayant un corps annulaire en matériau élastomérique, comprenant une partie cylindrique radialement extérieure, à la périphérie du pneumatique, pouvant comprendre une bande de roulement, et une partie cylindrique radialement intérieure, destinée à être montée sur une jante. Une pluralité de parois, espacées selon la direction circonférentielle, s'étendent depuis la partie cylindrique radialement intérieure jusqu'à la partie cylindrique radialement extérieure, et assurent le port de la charge. En outre, des flancs peuvent relier les deux parties cylindriques respectivement radialement intérieure et radialement extérieure, pour former, en association avec la bande de roulement et les flancs, une cavité fermée et permettre ainsi la pressurisation du pneumatique. Un tel pneumatique a toutefois une masse élevée, par rapport à un pneumatique classique, et, en raison de son caractère massif, est susceptible de dissiper une énergie élevée, pouvant limiter son endurance, et donc sa durée de vie.

Le document WO 2009087291 décrit une structure pneumatique comprenant deux viroles annulaires respectivement interne, ou radialement intérieure, et externe, ou radialement extérieure, reliées par deux flancs et par une structure porteuse. Selon cette invention, la structure porteuse est pressurisée et partage le volume annulaire du pneumatique en une pluralité de compartiments ou d'alvéoles, et les flancs sont liés ou intégrés à la structure porteuse. Dans ce cas, la charge appliquée est portée à la fois par la structure porteuse et les flancs. La répartition de pression dans l'aire de contact n'est pas homogène dans la largeur axiale de l'aire de contact, avec des surpressions au niveau des épaules dues à la difficulté de mise à plat méridienne en raison de la liaison entre les flancs et la structure porteuse. Ces surpressions au niveau des épaules sont susceptibles de générer une usure importante des épaules de la bande de roulement.

Le document WO 2005007422 décrit une roue adaptative comprenant une bande adaptative et une pluralité de rayons s'étendant radialement vers l'intérieur depuis la bande adaptative jusqu'à un moyeu. La bande adaptative est destinée à s'adapter à la surface de contact avec un sol et à envelopper les obstacles. Les rayons transmettent la charge portée entre la bande adaptative et le moyeu, grâce à la mise en tension des rayons qui ne sont pas en contact avec le sol. Une telle roue adaptative nécessite une optimisation de la répartition des rayons pour garantir une périphérie sensiblement cylindrique. De plus, une roue adaptative a une masse relativement élevée par rapport à un pneumatique classique.

D'autres structures pneumatiques sont décrites dans les documents US1426763, US2506861, CN101318450, WO2017/005713.

La présente invention a pour objectif de proposer un assemblage pour pneumatique permettant une mise à plat améliorée de la bande de roulement, lorsque le pneumatique est soumis à une charge.

### Procédé de fabrication d'un assemblage selon l'invention

A cet effet, l'invention a pour objet un procédé de fabrication d'un assemblage pour pneumatique, l'assemblage comprenant :
- un premier tissu ou tricot comprenant un ou plusieurs premiers éléments filaires,
- un deuxième tissu ou tricot comprenant un ou plusieurs deuxièmes éléments filaires,
- une structure porteuse comprenant des éléments porteurs reliant les premier et deuxième tissu(s) ou tricot(s) entre eux,
procédé dans lequel :
- on revêt chaque premier élément filaire d'au moins une couche d'une première composition adhésive et on revêt chaque deuxième élément filaire d'au moins une couche d'une deuxième composition adhésive,
- puis, on traite thermiquement chaque premier et deuxième élément filaire revêtu de façon à réticuler chaque première et deuxième composition adhésive,
- puis, on assemble chaque premier et deuxième élément filaire revêtu et traité thermiquement avec les éléments porteurs de façon à former l'assemblage.

Le principe d'un assemblage pour pneumatique selon l'invention est d'avoir une structure porteuse comprenant des éléments porteurs reliant les premier et deuxième tissu(s) ou tricot(s), et capable, une fois l'assemblage agencé dans le pneumatique, de porter la charge appliquée au pneumatique par la mise en tension d'une partie des éléments porteurs positionnés en dehors de l'aire de contact, les éléments porteurs positionnés dans l'aire de contact étant soumis à un flambage car soumis à un effort de compression et ne participant donc pas au port de la charge appliquée.

Grâce au procédé selon l'invention, on évite de modifier les propriétés géométriques de l'assemblage lors de l'étape de traitement thermique permettant de réticuler chaque première et deuxième composition adhésive. En effet, en traitant thermiquement les éléments filaires revêtus d'une composition adhésive, on observe une variation de leur longueur mais également leurs propriétés mécaniques, notamment en élongation. Ainsi, en formant l'assemblage puis en réalisant l'étape de traitement thermique des premier et deuxième éléments filaires revêtus, on modifierait à la fois la géométrie de chaque premier et deuxième élément filaire mais également la géométrie de l'assemblage et donc le fonctionnement attendu une fois l'assemblage dans le pneumatique. Dans le procédé selon l'invention, les étapes de revêtement individuel et de traitement thermique individuel de chaque premier et deuxième élément filaire étant réalisées avant l'étape de formation de l'assemblage, on modifie les propriétés géométriques individuelles de chaque premier et deuxième élément filaires avant l'étape de formation de l'assemblage, étape d'assemblage qui est effectuée en tenant compte des variations subies par chaque élément filaire. Ainsi, on obtient bien le fonctionnement attendu de l'assemblage en pneumatique.

En outre, le fait de réaliser les étapes de revêtement individuel et de traitement thermique individuel de chaque premier et deuxième élément filaire avant l'étape de formation de l'assemblage permet d'éviter la formation de points d'accroché aux entrecroisements des éléments filaires sur chaque premier et deuxième tissu ou tricot.

On peut envisager plusieurs modes de réalisation. Dans un mode de réalisation préféré, l'assemblage comprend des premier et deuxième tissus. Dans un autre mode de réalisation, l'assemblage comprend des premier et deuxième tricots. Dans encore un autre mode de réalisation, l'assemblage comprend un tissu et un tricot.

De préférence, le premier tissu ou tricot est constitué d'un ou de premiers plusieurs éléments filaires. De préférence, le deuxième tissu ou tricot est constitué d'un ou de plusieurs deuxièmes éléments filaires.

Dans un mode de réalisation préféré, la structure porteuse comprend une pluralité d'éléments porteurs identiques, c'est-à-dire dont les caractéristiques géométriques et les matériaux constitutifs sont identiques.

Les éléments porteurs sont agencés de sorte qu'ils sont deux à deux non liés mécaniquement dans un espace délimité par les premier et deuxième tissu(s) ou tricot(s). Ainsi, les éléments porteurs ont des comportements mécaniques indépendants. Par exemple, les éléments porteurs ne sont pas liés entre eux de façon à former un réseau ou un treillis.

Par élément filaire, on entend tout élément longiligne de grande longueur relativement à sa section transversale, quelle que soit la forme de cette dernière, par exemple circulaire, oblongue, rectangulaire ou carrée, ou même plate, cet élément filaire pouvant être par exemple torsadé ou ondulé. Lorsqu'il est de forme circulaire, son diamètre est de préférence inférieur à 5 mm, plus préférentiellement compris dans un domaine allant de 100 µm à 1,2 mm.

Avantageusement, les première et deuxième compositions adhésives réticulées sont sensiblement identiques.

Préférentiellement, chaque premier et deuxième élément filaire est textile, c'est-à-dire non métallique, et est par exemple réalisé dans un matériau choisi parmi un polyester, un polyamide, une polycétone, un alcool polyvinylique, une cellulose, une fibre minérale, une fibre naturelle, un matériau élastomérique ou un mélange de ces matériaux. Parmi les polyesters on citera par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate). Parmi les polyamides, on citera les polyamides aliphatiques tels que les polyamides 4-6, 6, 6-6 (nylon), 11 ou 12 et les polyamides aromatiques tels que l'aramide.

Par exemple, chaque premier et deuxième élément filaire est un assemblage textile comprenant une ou plusieurs fibres mono-filamentaire ou multi-filamentaires textiles, retordues ensemble ou non. Ainsi, dans un mode de réalisation, on pourra avoir un assemblage dans lequel les fibres sont sensiblement parallèles les unes aux autres. Dans un autre mode de réalisation, on pourra avoir également un assemblage dans lequel les fibres sont enroulées en hélice. Dans encore un autre mode de réalisation, chaque premier et deuxième élément filaire est constitué d'un monofilament. Chaque fibre mono-filamentaire ou multi-filamentaire présente un diamètre compris entre 5 et 20 µm, par exemple 10 µm.

Dans un autre mode de réalisation, chaque premier et deuxième élément filaire est métallique, par exemple un assemblage de monofilaments métalliques, chaque monofilament métallique présentant un diamètre typiquement inférieur à 50 µm, par exemple 10 µm. Dans un mode de réalisation, chaque premier et deuxième élément filaire est constitué d'un assemblage de plusieurs monofilaments métalliques. Dans un autre mode de réalisation, chaque premier et deuxième élément filaire est constitué d'un monofilament métallique.

Dans un mode de réalisation préféré, chaque élément porteur est un élément filaire porteur.

Par élément filaire, on entend tout élément longiligne de grande longueur relativement à sa section transversale, quelle que soit la forme de cette dernière, par exemple circulaire, oblongue, rectangulaire ou carrée, ou même plate, cet élément filaire pouvant être par exemple torsadé ou ondulé. Lorsqu'il est de forme circulaire, son diamètre est de préférence inférieur à 5 mm, plus préférentiellement compris dans un domaine allant de 100 µm à 1,2 mm.

Un élément filaire porteur, notamment la portion porteuse, présente typiquement une plus petite dimension caractéristique E de sa section moyenne S_{P} (qui est la moyenne des sections obtenues par la coupe de l'élément filaire porteur par toutes les surfaces parallèles aux premier et deuxième tissu(s) ou tricot(s) et comprises entre les premier et deuxième tissu(s) ou tricot(s)) préférentiellement au plus égale à 0.02 fois l'espacement maximal entre les deux faces internes des premier et deuxième tissu(s) ou tricot(s) (qui correspond à la hauteur radiale moyenne H de l'espace annulaire intérieur une fois l'assemblage agencé au sein du pneumatique) et un rapport de forme K de sa section moyenne S_{P} préférentiellement au plus égal à 3. Une plus petite dimension caractéristique E de la section moyenne S_{P} de l'élément porteur au plus égale à 0.02 fois la hauteur radiale moyenne H de l'espace annulaire intérieur exclut tout élément porteur massif, ayant un volume important. En d'autres termes, lorsqu'il est filaire, chaque élément porteur a un élancement élevé, selon la direction radiale, lui permettant de flamber au passage dans l'aire de contact. En dehors de l'aire de contact, chaque élément porteur retrouve sa géométrie initiale, car son flambage est réversible. Un tel élément porteur a une bonne tenue à la fatigue. Un rapport de forme K de sa section moyenne S_{P} au plus égal à 3 signifie que la plus grande dimension caractéristique L de sa section moyenne S_{P} est au plus égale à 3 fois la plus petite dimension caractéristique E de sa section moyenne S_{P}.

Un élément porteur filaire a un comportement mécanique de type filaire, c'est-à-dire qu'il ne peut être soumis qu'à des efforts d'extension ou de compression selon sa ligne moyenne.

Il est à noter que tous les éléments porteurs filaires d'une structure porteuse n'ont pas nécessairement des longueurs L_{P} identiques.

Préférentiellement, chaque élément filaire porteur est textile, c'est-à-dire non métallique, et est par exemple réalisé dans un matériau choisi parmi un polyester, un polyamide, une polycétone, un alcool polyvinylique, une cellulose, une fibre minérale, une fibre naturelle, un matériau élastomérique ou un mélange de ces matériaux. Parmi les polyesters on citera par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate). Parmi les polyamides, on citera les polyamides aliphatiques tels que les polyamides 4-6, 6, 6-6 (nylon), 11 ou 12 et les polyamides aromatiques tels que l'aramide.

Par exemple, chaque élément filaire porteur est un assemblage textile comprenant une ou plusieurs fibres mono-filamentaire ou multi-filamentaires textiles, retordues ensemble ou non. Ainsi, dans un mode de réalisation, on pourra avoir un assemblage dans lequel les fibres sont sensiblement parallèles les unes aux autres. Dans un autre mode de réalisation, on pourra avoir également un assemblage dans lequel les fibres sont enroulées en hélice. Dans encore un autre mode de réalisation, chaque élément filaire porteur est constitué d'un monofilament. Chaque fibre mono-filamentaire ou multi-filamentaire présente un diamètre compris entre 5 et 20 µm, par exemple 10 µm.

Dans un autre mode de réalisation, chaque élément filaire porteur est métallique, par exemple un assemblage de monofilaments métalliques, chaque monofilament métallique présentant un diamètre typiquement inférieur à 50 µm, par exemple 10 µm. Dans un mode de réalisation, chaque élément filaire porteur est constitué d'un assemblage de plusieurs monofilaments métalliques. Dans un autre mode de réalisation, chaque élément filaire porteur est constitué d'un monofilament métallique.

Dans un mode de réalisation, chaque élément filaire porteur s'étend alternativement du premier tissu ou tricot vers le deuxième tissu ou tricot et du deuxième tissu ou tricot vers le premier tissu ou tricot lorsqu'on se déplace le long de l'élément filaire porteur.

Encore plus préférentiellement, chaque élément filaire porteur est entrelacé avec chaque premier et deuxième tissu ou tricot. Un tel assemblage présente l'avantage de pouvoir être fabriqué en une seule étape de tissage. Toutefois, il est également possible d'envisager de fabriquer l'assemblage en deux étapes, une première étape de fabrication des premier et deuxième tissu(s) ou tricot(s) et une deuxième étape d'entrelacement du ou des éléments filaires porteurs avec les premier et deuxième tissu(s) ou tricot(s). Dans les deux cas, l'entrelacement de chaque élément porteur avec chaque premier et deuxième tissu ou tricot permet d'assurer l'ancrage mécanique de chaque élément porteur dans chaque premier et deuxième tissu ou tricot et ainsi de conférer les propriétés mécaniques souhaitées à la structure porteuse.

De préférence, l'élément filaire porteur comprend :
- au moins une portion filaire porteuse s'étendant entre les premier et deuxième tissu(s) ou tricot(s), et
- au moins des première et deuxième portions filaires d'ancrage de l'élément filaire porteur respectivement dans les premier et deuxième tissu(s) ou tricot(s), prolongeant la portion filaire porteuse respectivement dans les premier et deuxième tissu(s) ou tricot(s).

Chaque portion filaire porteuse qui relie les faces internes des premier et deuxième tissu(s) ou tricot(s) l'une à l'autre peut être caractérisée géométriquement par sa longueur L_{P} et par sa section moyenne S_{P}, qui est la moyenne des sections obtenues par la coupe de la portion filaire porteuse par toutes les surfaces parallèles aux premier et deuxième tissu(s) ou tricot(s) et comprises entre les premier et deuxième tissu(s) ou tricot(s). Dans le cas le plus fréquent d'une section constante de l'élément porteur et la portion filaire porteuse, la section moyenne S_{P} est égale à cette section constante.

La section moyenne S_{P} de chaque portion filaire porteuse comprend une plus grande dimension caractéristique L et une plus petite dimension caractéristique E, dont le rapport K=L/E est appelé rapport de forme. A titre d'exemples, une section moyenne S_{P} circulaire, ayant un diamètre égal à d, a un rapport de forme K=1, une section moyenne S_{P} rectangulaire, ayant une longueur L et une largeur I, a un rapport de forme K=L/I, et une section moyenne S_{P} elliptique, ayant un grand axe A et un petit axe a, a un rapport de forme K=A/a.

Dans un mode de réalisation préférentiel, le premier tissu ou tricot est un tissu comprenant des entrecroisements d'une première famille des premiers éléments filaires, sensiblement parallèles entre eux, et d'une deuxième famille des premiers éléments filaires, sensiblement parallèles entre eux.

Dans un mode de réalisation préférentiel, le deuxième tissu ou tricot est un tissu comprenant des entrecroisements d'une première famille des deuxièmes éléments filaires, sensiblement parallèles entre eux, et d'une deuxième famille des deuxièmes éléments filaires, sensiblement parallèles entre eux.

Dans ce mode de réalisation préférentiel, le tissu comprend, de manière connue pour l'homme du métier, une armure caractérisant l'entrecroisement des éléments filaires des première et deuxième familles. Selon les modes de réalisation, cette armure est de type toile, serge ou satin. De façon préférée, afin de conférer des bonnes propriétés mécaniques dans une utilisation en pneumatique, l'armure est de type toile.

Dans un autre mode de réalisation, le premier et/ou le deuxième tissu ou tricot est un tricot comprenant des boucles entrelacées.

De préférence, les premiers et deuxièmes éléments filaires de la première famille s'étendant selon première direction et les premiers et deuxièmes éléments filaires de la deuxième famille s'étendant selon une deuxième direction, les premières et deuxièmes directions forment l'une avec l'autre un angle allant de 70° à 90°.

Ainsi, dans un mode de réalisation préféré dans lequel le premier tissu ou tricot est un tissu comprenant des entrecroisements d'une première famille des premiers éléments filaires, sensiblement parallèles entre eux, et d'une deuxième famille des premiers éléments filaires, sensiblement parallèles entre eux, chaque première portion filaire d'ancrage est enroulée au moins en partie autour d'au moins un des premiers éléments filaires d'au moins une des première et deuxième familles des premiers éléments filaires du premier tissu.

Dans un mode de réalisation préféré dans lequel le deuxième tissu ou tricot est un tissu comprenant des entrecroisements d'une première famille des deuxièmes éléments filaires, sensiblement parallèles entre eux, et d'une deuxième famille des deuxièmes éléments filaires, sensiblement parallèles entre eux, chaque deuxième portion filaire d'ancrage est enroulée au moins en partie autour d'au moins un des deuxièmes éléments filaires d'au moins une des première et deuxième familles des deuxièmes éléments filaires du deuxième tissu.

Encore plus préférentiellement, chaque première famille étant constituée de premiers et deuxièmes éléments filaires de chaine et la deuxième famille étant constituée de premiers et deuxièmes éléments filaires de trame, chaque première et deuxième portion filaire d'ancrage est enroulée au moins en partie autour de premiers et deuxièmes éléments filaires de trame respectivement de chaque premier et deuxième tissu. Dans un autre mode de réalisation, chaque première et deuxième portion filaire d'ancrage est enroulée au moins en partie autour de premiers et deuxièmes éléments filaires de chaine respectivement de chaque premier et deuxième tissu.

Les caractéristiques mécaniques de tels tissus telles que leur rigidité en extension et leur force à rupture en traction, selon le sens des éléments filaires de la première famille ou celui des éléments filaires de la deuxième famille, dépendent des caractéristiques des éléments filaires, telles que, pour des éléments filaires textiles, le titre, exprimé en tex ou g/1000 m, la ténacité, exprimée en cN/ tex, et la contraction standard, exprimée en %, ces éléments filaires étant répartis selon une densité donnée, exprimée en nombre de fils/dm. Toutes ces caractéristiques sont fonction du matériau constitutif des éléments filaires et de leur procédé de fabrication.

De préférence, le premier tissu s'étendant selon une direction générale principale, les premiers éléments filaires d'au moins une des première et deuxième familles s'étendent selon une direction formant, avec la direction générale principale du premier tissu, un angle au moins égal à 10° et au plus égal à 45°. Encore plus préférentiellement, la première famille étant constituée de premiers éléments filaires de chaine et la deuxième famille étant constituée de premiers éléments filaires de trame, les premiers éléments filaires de chaine forment un angle au moins égal à 10° et au plus égal à 45° avec la direction principale du premier tissu. Encore plus préférentiellement, les premiers éléments filaires de trame forment un angle au moins égal à 10° et au plus égal à 45° avec la direction principale du premier tissu.

De préférence, le deuxième tissu s'étendant selon une direction générale principale, les deuxièmes éléments filaires d'au moins une des première et deuxième familles s'étendent selon une direction formant, avec la direction générale principale du deuxième tissu, un angle au moins égal à 10° et au plus égal à 45°. Encore plus préférentiellement, la première famille étant constituée de deuxièmes éléments filaires de chaine et la deuxième famille étant constituée de deuxièmes éléments filaires de trame, les éléments filaires de chaine forment un angle au moins égal à 10° et au plus égal à 45° avec la direction principale du deuxième tissu. Encore plus préférentiellement, les deuxièmes éléments filaires de trame forment un angle au moins égal à 10° et au plus égal à 45° avec la direction principale du deuxième tissu.

Par direction générale principale, on entend la direction générale selon laquelle s'étend le tissu selon sa plus grande longueur.

Dans un mode de réalisation, on revêt directement chaque premier élément filaire d'une couche d'un premier primaire d'adhésion et on revêt la couche du premier primaire d'adhésion de la couche de la première composition adhésive.

Dans un mode de réalisation, on revêt directement chaque deuxième élément filaire d'une couche d'un deuxième primaire d'adhésion et on revêt la couche du deuxième primaire d'adhésion de la couche de la deuxième composition adhésive.

Chaque premier et deuxième primaire d'adhésion est par exemple une résine époxy et/ou un composé isocyanate, éventuellement bloqué. Chaque première et deuxième composition adhésive utilisée pourra être une colle RFL classique (Résorcinol-formaldéhyde-latex) ou bien encore les colles décrites dans les demandes WO 2013/017421, WO 2013/017422, WO 2013/017423, WO2015007641 et WO2015007642.

Dans un autre mode de réalisation, on revêt directement chaque premier et deuxième élément filaire d'une couche respectivement de chaque première et deuxième composition adhésive.

Que ce soit dans l'un ou l'autre des modes de réalisation décrits ci-dessus, il pourra être avantageux d'activer la surface des premiers et deuxièmes éléments filaires par voie physique, par exemple, en utilisant un traitement par un rayonnement tel qu'un faisceau d'électrons, ou par plasma.

Dans un mode de réalisation, chaque élément porteur étant un élément filaire porteur :
- on revêt chaque élément filaire porteur d'au moins une couche d'une troisième composition adhésive,
- puis, on traite thermiquement chaque élément filaire porteur revêtu de façon à réticuler la troisième composition adhésive,
- puis, on assemble chaque élément filaire porteur revêtu et traité thermiquement avec les premier et deuxième éléments filaires revêtus et traités thermiquement de façon à former l'assemblage.

### Assemblage

On décrit également un assemblage pour pneumatique, l'assemblage comprenant :
- un premier tissu ou tricot comprenant un ou plusieurs premiers éléments filaires, chaque premier élément filaire étant revêtu d'au moins une couche d'une première composition adhésive réticulée,
- un deuxième tissu ou tricot comprenant un ou plusieurs deuxièmes éléments filaires, chaque deuxième élément filaire étant revêtu d'au moins une couche d'une deuxième composition adhésive réticulée,
- une structure porteuse comprenant des éléments porteurs reliant les premier et deuxième tissu(s) ou tricot(s) entre eux,
l'assemblage étant susceptible d'être obtenu par un procédé tel que décrit ci-dessus.

Le fait de réaliser les étapes de revêtement individuel et de traitement thermique individuel de chaque premier et deuxième élément filaire avant l'étape de formation de l'assemblage permet d'éviter la formation de points d'accroché aux entrecroisements des éléments filaires sur chaque premier et deuxième tissu ou tricot. Ainsi, d'une part, chaque premier et deuxième tissu ou tricot de l'assemblage selon l'invention est sensiblement dépourvu de points d'accroché dû respectivement aux première et deuxième compositions adhésives entre respectivement les premier et deuxième éléments filaires. D'autre part, les premier et deuxième éléments de renfort sont individuellement mieux pénétrés par respectivement chaque première et deuxième composition adhésive contrairement à des premiers et deuxièmes éléments de renfort que l'on aurait revêtu après la formation de chaque premier et deuxième tissu et dont la pénétration par respectivement chaque première et deuxième composition adhésive au niveau des entrecroisements aurait été altéré.

On décrit également un assemblage pour pneumatique, l'assemblage comprenant :
- un premier tissu ou tricot comprenant un ou plusieurs premiers éléments filaires, chaque premier élément filaire étant revêtu d'au moins une couche d'une première composition adhésive réticulée et étant obtenu après une étape de revêtement individuel de chaque premier élément filaire par la couche de la première composition adhésive suivi d'une étape de traitement thermique individuel de chaque premier élément filaire revêtu;
- un deuxième tissu ou tricot comprenant un ou plusieurs deuxièmes éléments filaires, chaque deuxième élément filaire étant revêtu d'au moins une couche d'une deuxième composition adhésive réticulée et étant obtenu après une étape de revêtement individuel de chaque deuxième élément filaire par la couche de la deuxième composition adhésive suivi d'une étape de traitement thermique individuel de chaque deuxième élément filaire revêtu;
- une structure porteuse comprenant des éléments porteurs reliant les premier et deuxième tissu(s) ou tricot(s) entre eux.

### Ensemble

On décrit aussi un ensemble pour pneumatique, l'ensemble comprenant :
- des première et deuxième couches respectivement de première et deuxième compositions polymériques ;
- un assemblage tel que défini ci-dessus dans lequel :
   - le premier tissu ou tricot est imprégné au moins en partie de la première composition polymérique et forme une première structure tissée ou tricotée imprégnée de l'ensemble ;
   - le deuxième tissu ou tricot est imprégné au moins en partie de la deuxième composition polymérique et forme une deuxième structure tissée ou tricotée imprégnée de l'ensemble.

Dans un mode de réalisation, chaque composition polymérique comprend au moins un élastomère, de préférence un élastomère diénique. Par élastomère ou caoutchouc (les deux termes étant synonymes) du type diénique, on entend de manière générale un élastomère issu au moins en partie (i.e. un homopolymère ou un copolymère) de monomères diènes (monomères porteurs de deux doubles liaisons carbone-carbone, conjuguées ou non). Cette composition peut alors se trouver soit à l'état crue ou à l'état cuit.

De manière particulièrement préférentielle, l'élastomère diénique de la composition de caoutchouc est choisi dans le groupe constitué par les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Chaque composition polymérique peut contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

Par ailleurs, dans ce mode de réalisation, chaque composition polymérique comprend, en plus de l'élastomère, de préférence diénique, une charge renforçante, par exemple du noir de carbone, un système de réticulation, par exemple un système de vulcanisation et des additifs divers.

Dans un autre mode de réalisation, chaque composition polymérique comprend au moins un polymère thermoplastique. Un polymère thermoplastique est par définition thermofusible. Des exemples de tels polymères thermoplastiques sont les polyamides aliphatiques, par exemple le nylon, les polyesters, par exemple le PET ou le PEN, et les élastomères thermoplastiques.

Les élastomères thermoplastiques (en abrégé "TPE") sont des élastomères se présentant sous la forme de copolymères blocs à base de blocs thermoplastiques. De structure intermédiaire entre polymères thermoplastiques et élastomères, ils sont constitués de manière connue de séquences rigides thermoplastiques, notamment polystyrène reliées par des séquences souples élastomère, par exemple polybutadiène ou polyisoprène pour des TPE insaturés ou poly(éthylène/butylène) pour des TPE saturés. C'est la raison pour laquelle, de manière connue, les copolymères blocs TPE ci-dessus se caractérisent généralement par la présence de deux pics de transition vitreuse, le premier pic (température la plus basse, généralement négative) étant relatif à la séquence élastomère du copolymère TPE, le second pic (température la plus haute, positive, typiquement supérieure à 80°C pour des élastomères préférentiels du type TPS) étant relatif à la partie thermoplastique (par exemple blocs styrène) du copolymère TPE. Ces élastomères TPE sont souvent des élastomères triblocs avec deux segments rigides reliés par un segment souple. Les segments rigides et souples peuvent être disposés linéairement, en étoile ou branchés. Ces élastomères TPE peuvent être aussi des élastomères diblocs avec un seul segment rigide relié à un segment souple. Typiquement, chacun de ces segments ou blocs contient au minimum plus de 5, généralement plus de 10 unités de base (par exemple unités styrène et unités isoprène pour un copolymère blocs styrène/ isoprène/ styrène).

De préférence, l'élastomère thermoplastique est insaturé. Par élastomère TPE insaturé, on entend par définition et de manière bien connue un élastomère TPE qui est pourvu d'insaturations éthyléniques, c'est-à-dire qui comporte des doubles liaisons carbone-carbone (conjuguées ou non) ; réciproquement, un élastomère TPE dit saturé est bien entendu un élastomère TPE qui est dépourvu de telles doubles liaisons.

Les première et deuxième compositions polymériques peuvent être différentes ou identiques. Par exemple, la première composition polymérique peut comprendre un élastomère diénique et la deuxième composition polymérique peut comprendre un élastomère thermoplastique ou inversement.

### Pneumatique

On décrit aussi un pneumatique comprenant un assemblage tel que défini ci-dessus ou un ensemble tel que défini ci-dessus.

Dans un mode de réalisation, le pneumatique comprend:
- une première structure de révolution comprenant le premier tissu ou tricot et une première couche d'une première composition polymérique, le premier tissu ou tricot étant imprégné au moins en partie de la première composition polymérique ;
- une deuxième structure de révolution comprenant le deuxième tissu ou tricot et une deuxième couche d'une deuxième composition polymérique, le deuxième tissu ou tricot étant imprégné au moins en partie de la deuxième composition polymérique, la deuxième structure de révolution étant agencée radialement à l'intérieur de la première structure de révolution ;

- une structure de révolution de sommet agencée radialement à l'extérieur de la première structure de révolution ;
- un espace annulaire intérieur délimité par une face interne de la première structure de révolution et une face interne de la deuxième structure de révolution ;
- deux flancs reliant entre elles chaque extrémité axiale de la première structure de révolution radialement extérieure et chaque extrémité axiale de la deuxième structure de révolution, les deux flancs délimitant l'espace annulaire intérieur ; l'espace annulaire intérieur formant une cavité fermée pouvant être pressurisée par un gaz de gonflage.

La deuxième structure tissée ou tricotée imprégnée formant la deuxième structure de révolution radialement intérieure du pneumatique est destinée à assurer, entre autres fonctions, la liaison de l'assemblage, et donc du pneumatique, avec le moyen de montage. La première structure tissée ou tricotée imprégnée formant la première structure de révolution radialement extérieure du pneumatique est destinée à assurer, entre autres fonctions, la liaison de l'assemblage avec la structure de révolution de sommet.

De façon préférentielle, chaque flanc ayant une longueur curviligne L_{F}, la longueur curviligne L_{F} de chaque flanc est avantageusement au moins égale à 1.05 fois, de préférence, 1.15 fois la hauteur radiale moyenne H de l'espace annulaire intérieur. Encore plus avantageusement, la longueur curviligne L_{F} de chaque flanc est au moins égale à 1.3 fois et au plus égale à 1.6 fois la hauteur radiale moyenne H de l'espace annulaire intérieur. Cette caractéristique de longueur de flanc garantit que la déformation du flanc ne va pas perturber la mise à plat méridienne du dispositif de type pneumatique en raison d'une trop faible courbure.

Avantageusement, les flancs ne sont pas liés directement à l'assemblage et de préférence ne sont pas liés directement aux éléments porteurs. Les flancs participent en partie au port de la charge, selon leur propre rigidité structurelle. Toutefois, les flancs ont un comportement mécanique indépendant et n'interfèrent pas dans le comportement mécanique de la structure porteuse. Les flancs comprennent généralement au moins un matériau élastomérique et peuvent comprendre éventuellement une armature de renforcement.

Dans le cas d'une pressurisation effective par un gaz de gonflage, le pneumatique présente alors une rigidité pneumatique, due à la pression, qui va également contribuer au port de la charge appliquée. Usuellement, pour une utilisation sur un véhicule de tourisme, la pression est au moins égale à 0.5 bar, de préférence au moins égale à 1 bar. Plus la pression est élevée, plus la contribution de la rigidité pneumatique au port de la charge appliquée est élevée, et, corrélativement, plus la contribution de la rigidité structurelle de la structure porteuse et/ou des flancs et/ou des structures de révolution respectivement radialement extérieure et radialement intérieure au port de la charge appliquée est faible. En l'absence de pressurisation et dans le cas d'une faible rigidité structurelle des flancs, la structure porteuse et les structures de révolution respectivement radialement extérieure et radialement intérieure seraient amenées à assurer la quasi-totalité du port de la charge, les flancs ne jouant principalement qu'un rôle de protection vis-à-vis des agressions éventuelles par des éléments extérieurs au pneumatique.

La première structure tissée ou tricotée imprégnée formant la première structure de révolution radialement extérieure du pneumatique présente un axe de révolution confondu avec l'axe de rotation du pneumatique. La deuxième structure tissée ou tricotée imprégnée formant la deuxième structure de révolution radialement intérieure du pneumatique est coaxiale à la première structure tissée ou tricotée imprégnée formant la première structure de révolution radialement extérieure du pneumatique.

L'espace annulaire intérieur a une hauteur radiale moyenne H. Lorsque le pneumatique est soumis à une charge radiale nominale Z_{N} et est en contact avec un sol plan par une surface de contact A, les éléments porteurs, reliés à la portion de la première structure tissée ou tricotée imprégnée formant la première structure de révolution radialement extérieure du pneumatique en contact avec le sol par l'intermédiaire du premier tissu ou tricot, sont soumis à un flambage en compression et au moins une partie des éléments porteurs, reliés à la portion de première structure tissée ou tricotée imprégnée formant la première structure de révolution radialement extérieure du pneumatique non en contact avec le sol, sont en tension.

Afin de supporter la charge appliquée, la densité surfacique moyenne D de portions filaires porteuses par unité de surface de la première structure tissée ou tricotée imprégnée formant la première structure de révolution radialement extérieure, exprimée en 1/m2, étant au moins égale à (S/S_{E})^{∗}Z/(A^{∗}Fr), où S est la surface, en m2, de la face radialement intérieure de la structure de révolution de sommet, S_{E} est la surface de liaison entre la face externe de la première structure tissée ou tricotée imprégnée formant la première structure de révolution radialement extérieure (qui est la face externe de la première bande) et la face radialement intérieure de la structure de révolution de sommet, en m2, Z_{N} est la charge radiale nominale, en N, appliquée au pneumatique, A est la surface de contact au sol, en m2, du pneumatique, et Fr la force à rupture, en N, de chaque portion porteuse. La charge radiale nominale Z_{N} est la charge recommandée pour l'utilisation du pneumatique. La surface de contact au sol A est la surface selon laquelle le pneumatique est écrasé sur le sol sous l'action de la charge radiale nominale Z_{N}.

L'expression selon laquelle D est au moins égale à (S/S_{E})^{∗}Z/(A^{∗}Fr) traduit, en particulier, le fait que la densité surfacique moyenne D des portions porteuses est d'autant plus forte que la charge radiale nominale Z_{N} élevée et/ou que le rapport de surfaces S_{E}/S, représentant le taux de recouvrement de la face radialement intérieure de la structure de révolution de sommet par la première structure tissée ou tricotée imprégnée formant la première structure de révolution radialement extérieure, est faible. La densité surfacique moyenne D des portions porteuses est d'autant plus faible que la force à rupture en traction Fr d'une portion porteuse est élevée.

Une telle densité surfacique moyenne D des portions porteuses permet, d'une part, aux éléments porteurs en extension en dehors de l'aire de contact de porter la charge radiale nominale Z_{N}, et, d'autre part, aux éléments porteurs en compression dans l'aire de contact de garantir une mise à plat de la bande de roulement, à la fois dans un plan circonférentiel et dans un plan méridien, améliorée par rapport aux pneumatiques connus de l'état de la technique.

Généralement, la densité surfacique des portions porteuses est constante à la fois selon la direction circonférentielle et selon la direction axiale, c'est-à-dire que la répartition des portions porteuses est uniforme à la fois circonférentiellement et axialement : la densité surfacique moyenne D est donc égale à la densité surfacique constante. L'avantage d'une densité surfacique constante est de contribuer à conférer à la bande de roulement une géométrie quasi cylindrique, avec un effet dit de « mise en marguerite » diminué par rapport à d'autres pneumatiques de l'état de la technique.

Toutefois, dans certains modes de réalisation, la densité surfacique des portions porteuses peut être variable selon la direction circonférentielle et/ou selon la direction axiale, c'est-à-dire que la répartition des portions porteuses n'est pas nécessairement uniforme circonférentiellement et/ou axialement, d'où l'introduction de la caractéristique de densité surfacique moyenne D de portions porteuses.

La densité surfacique D des portions porteuses, exprimée en 1/m2, est avantageusement au moins égale à 3^{∗}(S/S_{E})^{∗}Z/(A^{∗}Fr). Une densité surfacique plus élevée de portions porteuses améliore l'homogénéisation des pressions dans l'aire de contact au sol et garantit un coefficient de sécurité plus élevé vis-à-vis de la charge appliquée et vis-à-vis de l'endurance.

La densité surfacique D des portions porteuses, exprimée en 1/m2, est encore plus avantageusement au moins égale à 6^{∗}(S/S_{E})^{∗}Z/(A^{∗}Fr). Une densité surfacique encore plus élevée de portions porteuses améliore encore davantage l'homogénéisation des pressions dans l'aire de contact au sol et permet d'augmenter encore le coefficient de sécurité vis-à-vis de la charge appliquée et vis-à-vis de l'endurance.

La densité surfacique moyenne D des portions porteuses, exprimée en 1/m2, est avantageusement au moins égale à 5000.

Dans certains modes de réalisation, la surface S_{E} est sensiblement égale à la surface S, c'est-dire que la première structure tissée ou tricotée imprégnée formant la première structure de révolution radialement extérieure au premier tissu ou tricot recouvre intégralement la face radialement intérieure de la structure de révolution de sommet. Dans ces conditions, la densité surfacique moyenne D des portions porteuses minimale est égale à Z/(A^{∗}Fr).

Dans d'autres modes de réalisation, S_{E} est différente de S et même S_{E}<S. En effet, la première structure tissée ou tricotée imprégnée n'est pas obligatoirement continue (axialement et/ou circonférentiellement) et peut être constituée de portions de tissu ou tricot juxtaposées : dans ce cas, la surface S_{E} est la somme des surfaces de liaison entre les faces externes de la première structure tissée ou tricotée imprégnée formant la première structure de révolution radialement extérieure (qui sont les faces externes de la première couche) et la face radialement intérieure de la structure de révolution de sommet. Ainsi, quand S_{E}<S, la première structure tissée ou tricotée imprégnée formant la première structure de révolution radialement extérieure au premier tissu ou tricot ne recouvre pas intégralement c'est-à-dire ne recouvre que partiellement, la face radialement intérieure de la structure de révolution de sommet.

Cette conception permet avantageusement d'avoir un assemblage pouvant être fabriquée de façon indépendante et intégrée d'un seul bloc lors de la fabrication du pneumatique. L'assemblage utilisé peut être solidarisé à d'autres éléments du pneumatique par vulcanisation, collage ou tout autre procédé de liaison des première et deuxième couches des première et deuxième compositions polymériques.

Le premier tissu ou tricot radialement extérieur et le deuxième tissu ou tricot radialement intérieur servent d'interfaces entre les éléments porteurs et les structures de révolution respectivement radialement extérieure et radialement intérieure qui ne sont donc pas en contact direct.

Grâce au pneumatique décrit, on observe une mise à plat améliorée de la bande de roulement, en particulier dans un plan méridien, par une augmentation des rayons de courbure méridiens au niveau des extrémités axiales de la bande roulement.

Il en résulte, en particulier, une homogénéisation des pressions dans l'aire de contact au sol, ce qui contribue à une augmentation de la durée de vie en usure et de l'adhérence du pneumatique.

On observe également une augmentation des fréquences propres de vibrations du pneumatique, ce qui contribue à l'amélioration du confort vibratoire et acoustique du pneumatique.

Enfin, la résistance au roulement d'un tel pneumatique est sensiblement diminuée, ce qui est favorable à une baisse de la consommation de carburant du véhicule.

### Procédé de fabrication d'un pneumatique selon l'invention

L'invention a encore pour objet un procédé de fabrication d'un pneumatique dans lequel :
- on enroule autour d'un cylindre de confection sensiblement de révolution autour d'un axe de révolution un assemblage ou un ensemble tel que défini ci-dessus ;
- on écarte radialement par rapport à l'axe de révolution au moins un des premier et deuxième tissu ou tricot.

Conformément à l'invention, le pneumatique comprenant :
- une première structure de révolution comprenant le premier tissu ou tricot et une première couche d'une première composition polymérique, le premier tissu ou tricot étant imprégné au moins en partie de la première composition polymérique ;
- une deuxième structure de révolution comprenant le deuxième tissu ou tricot et une deuxième couche d'une deuxième composition polymérique, le deuxième tissu ou tricot étant imprégné au moins en partie de la deuxième composition polymérique, la deuxième structure de révolution étant agencée radialement à l'intérieur de la première structure de révolution ;
- un espace annulaire intérieur délimité par une face interne de la première structure de révolution et une face interne de la deuxième structure de révolution ;
- deux flancs reliant entre elles chaque extrémité axiale de la première structure de révolution et chaque extrémité axiale de la deuxième structure de révolution, les deux flancs délimitant l'espace annulaire intérieur ; l'espace annulaire intérieur formant une cavité fermée pouvant être pressurisée par un gaz de gonflage ;
procédé dans lequel:
- on forme l'espace annulaire intérieur ;
- on déploie l'espace annulaire intérieur.

De préférence, pour former l'espace annulaire intérieur, on joint chaque flanc à chaque extrémité axiale des première et deuxième structures de révolution de façon à constituer l'espace annulaire intérieur.

Avantageusement, on déploie l'espace annulaire intérieur par pressurisation par un gaz de gonflage de l'espace annulaire intérieur.

De façon préférée, après le déploiement de l'espace annulaire intérieur, on enroule une structure de révolution de sommet radialement à l'extérieur de la première structure de révolution.

L'invention sera mieux comprise à la lecture de la description qui va suivre, donnée uniquement à titre d'exemple non limitatif et faite en se référant aux dessins dans lesquels:
- la figure 1 est une vue en perspective et en coupe partielle d'un pneumatique selon un premier mode de réalisation de l'invention ;
- la figure 2 est une vue en coupe circonférentielle du pneumatique de la figure 1, dans l'état écrasé ;
- la figure 3 est une vue en coupe méridienne du pneumatique de la figure 1 ;
- la figure 4 est une vue de dessus d'un des tissus d'un assemblage selon l'invention ;
- la figure 5 est une vue en coupe d'une ensemble selon l'invention comprenant l'assemblage selon l'invention de la figure 4 selon un plan de coupe P-P ;
- la figure 6 est une vue d'un élément porteur d'une structure porteuse du pneumatique de la figure 1 ;
- la figure 7 est une vue en coupe méridienne partielle du pneumatique de la figure 1 permettant de voir une partie de l'assemblage des figures 4 et 5 après fabrication du pneumatique ;
- la figure 8 illustre des courbes-types comparées de l'évolution de la charge appliquée en fonction de la flèche pour le pneumatique de la figure 1 et un pneumatique de référence de l'état de la technique ;
- la figure 9 illustre des courbes-types comparées de l'évolution de la rigidité de dérive en fonction de la charge appliquée pour le pneumatique de la figure 1 et un pneumatique de référence de l'état de la technique ;
- les figures 10A à 10C illustrent le déploiement de l'assemblage et de l'ensemble selon l'invention lors du procédé de fabrication du pneumatique selon l'invention ;
- la figure 11 est une vue analogue à celle de la figure 1 d'un pneumatique selon un deuxième mode de réalisation de l'invention ;
- la figure 12 est une vue analogue à celle de la figure 7 du pneumatique de la figure 11.

### EXEMPLES DE PNEUMATIQUES

Dans les figures, on a représenté un repère X, Y, Z correspondant aux orientations habituelles respectivement axiale (selon la direction YY'), radiale (selon la direction ZZ') et circonférentielle (selon la direction XX') d'un pneumatique.

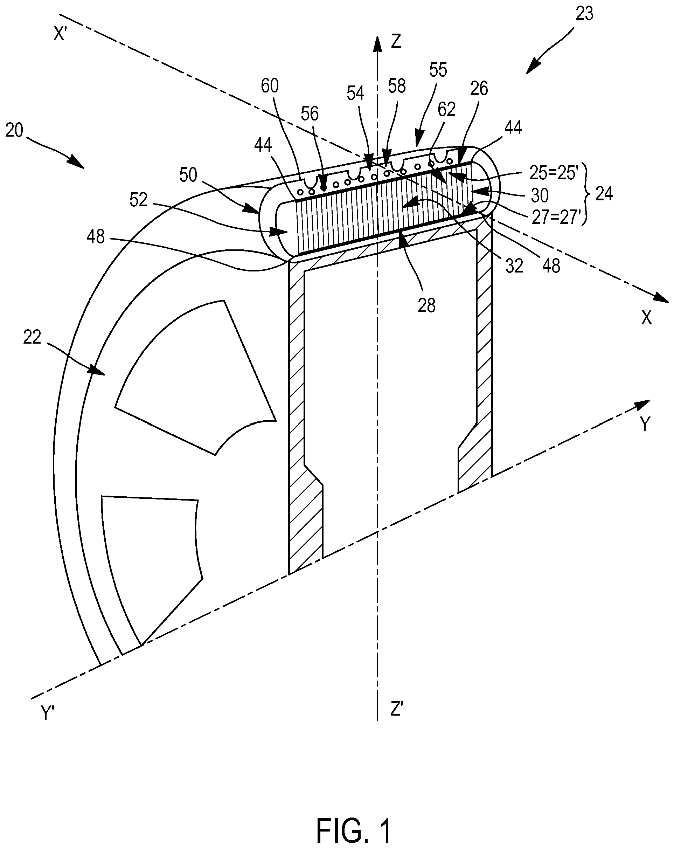

On a représenté sur la figure 1 un pneumatique conforme à un premier mode de réalisation de l'invention et désigné par la référence générale 20. Le pneumatique 20 est sensiblement de révolution autour d'un axe sensiblement parallèle à la direction axiale YY'. Le pneumatique 20 est ici destiné à un véhicule de tourisme. Sur la figure 1, le pneumatique 20 est monté sur un moyen de montage 22, ici une jante, formant ainsi un ensemble monté 23 pour véhicule.

Le pneumatique 20 comprend un assemblage 24 comprenant une première structure tissée ou tricotée imprégnée 25 et une deuxième structure tissée ou tricotée imprégnée 27. La deuxième structure tissée ou tricotée imprégnée 27 est agencée radialement à l'intérieur par rapport à la première structure tissée imprégnée 25. En l'espèce, chaque première et deuxième structure 25, 27 est une structure tissée imprégnée. En variante, chaque première et deuxième structure 25, 27 est une structure tricotée imprégnée.

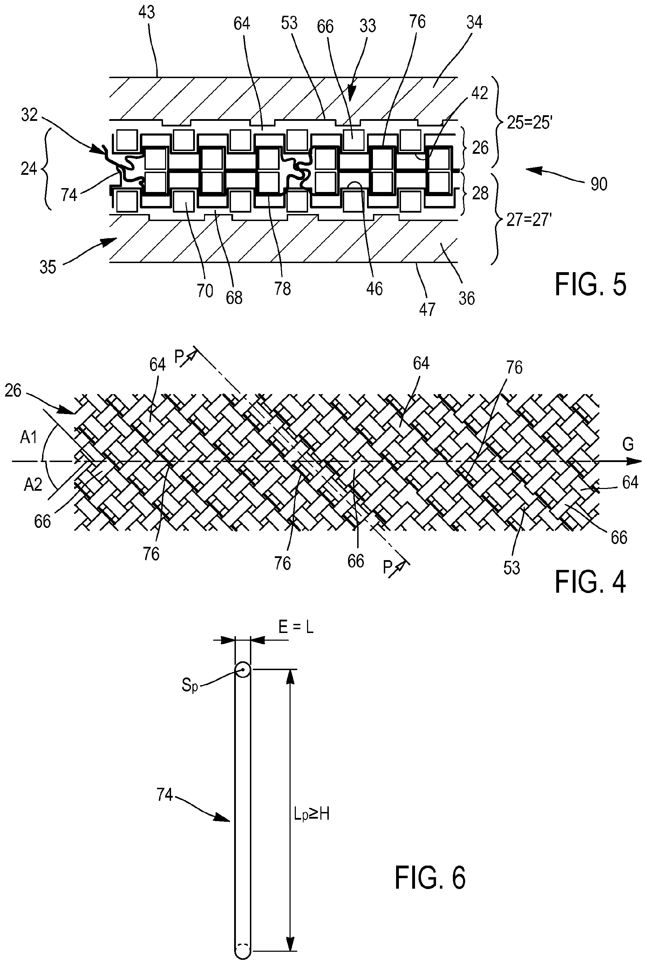

Comme illustré sur la figure 5, la première structure tissée imprégnée 25 comprend un premier tissu ou tricot 26, ici un tissu 26, et une première couche 33 d'une première composition polymérique 34, le premier tissu 26 étant imprégné au moins en partie de la première composition polymérique 34. La deuxième structure tissée imprégnée 27 comprend un deuxième tissu ou tricot 28, ici un tissu 28, et une deuxième couche 35 d'une deuxième composition polymérique 36, le deuxième tissu 28 étant imprégné au moins en partie de la deuxième composition polymérique 36. En variante, chaque première et deuxième structure 25, 27 comprend un tricot imprégné au moins en partie respectivement par chaque composition polymérique 34, 36.

Dans le pneumatique 20, le premier tissu 26 est agencé radialement à l'extérieur par rapport au deuxième tissu 28. Chaque première et deuxième composition polymérique 34, 36 comprend par exemple une composition élastomérique comprenant au moins un élastomère, de préférence diénique, par exemple du caoutchouc naturel.

Au sein du pneumatique 20, la première structure tissée imprégnée 25 forme une première structure de révolution 25' et la deuxième structure tissée imprégnée 27 forme une deuxième structure de révolution 27' agencée radialement à l'intérieur de la première structure de révolution 25'.

L'assemblage 24 comprend également une structure porteuse 30 comprenant des éléments porteurs 32 reliant les premier et deuxième tissus 26, 28 entre eux. La structure porteuse 30 est ici constituée d'une pluralité d'éléments porteurs 32.

De plus, le pneumatique 20 comprend une structure de révolution de sommet 55 agencée radialement à l'extérieur de la première structure tissée imprégnée 25 formant la première structure de révolution radialement extérieure 25'. La structure de révolution de sommet 55 comprend une armature circonférentielle de renforcement 54 et une bande de roulement 58 comme illustré sur les figures 1 et 5. La structure de révolution de sommet 55 comprend une face radialement intérieure 59 et une face radialement extérieure 60 formée par la face extérieure de la bande de roulement 58.

L'armature circonférentielle de renforcement 54 comprend une composition polymérique, par exemple une composition élastomérique comprenant au moins un élastomère, de préférence diénique, par exemple du caoutchouc naturel, dans laquelle sont noyés plusieurs éléments de renforts métalliques ou textiles 56, connus de l'homme du métier.

L'armature circonférentielle de renforcement 54 est agencée radialement à l'extérieur de la première structure tissée imprégnée 25 formant la première structure de révolution radialement extérieure 25' du pneumatique 20. La bande de roulement 58 est destinée à entrer en contact avec un sol. La bande de roulement 58 est constituée d'une composition polymérique, par exemple une composition élastomérique comprenant au moins un élastomère, de préférence diénique, par exemple du caoutchouc naturel. La bande de roulement 58 est agencée radialement à l'extérieur de l'armature circonférentielle de renforcement 54.

Comme illustré sur les figures 1 et 5, la première structure tissée imprégnée 25 formant la première structure de révolution radialement extérieure 25' du pneumatique 20, la deuxième structure tissée imprégnée 27 formant la deuxième structure de révolution radialement intérieure 27' du pneumatique 20, la structure de révolution de sommet 55 présentent un axe de révolution commun, en l'espèce l'axe de rotation YY' du pneumatique 20.

La première structure tissée imprégnée 25 formant la première structure de révolution radialement extérieure 25' du pneumatique 20 présente une face interne 42 et une face externe 43 ainsi que deux extrémités axiales 44. La face interne 42 est une face interne du premier tissu 26 et la face externe 43 est une face externe de la première couche 33. Au sein du pneumatique 20, la face interne 42 est agencée radialement à l'intérieur de la face externe 43 et la face externe 43 est au contact d'une face radialement intérieure de la structure de révolution de sommet 55.

La deuxième structure tissée imprégnée 27 formant la deuxième structure de révolution radialement inérieure 27' du pneumatique 20 présente une face interne 46 et une face externe 47 ainsi que deux extrémités axiales 48. La face interne 46 est une face interne du deuxième tissu 28 et la face externe 47 est une face externe de la deuxième couche 35. Au sein du pneumatique 20, la face interne 46 est agencée radialement à l'extérieur de la face externe 47.

Les deux faces 42 et 46 sont en regard l'une de l'autre et sensiblement parallèle l'une à l'autre. Au sein du pneumatique 20, chaque surface 42, 46 décrit un cylindre de révolution autour de l'axe YY' du pneumatique 20.

En référence à la figure 1, le pneumatique 20 comprend également deux flancs 50. Chaque flanc 50 relie entre elles chaque extrémité axiale 44 de la première structure tissée imprégnée 25 formant la première structure de révolution radialement extérieure 25' du pneumatique 20 et chaque extrémité axiale 48 de la deuxième structure tissée imprégnée 27 formant la deuxième structure de révolution radialement intérieure 27' du pneumatique 20.

Le pneumatique 20 comprend également un espace annulaire intérieur 52 délimité d'une part, par chaque face interne 42 et 46 et, d'autre part, par les deux flancs 50. L'espace annulaire intérieur 52 forme une cavité fermée pouvant être pressurisé par un gaz de gonflage, par exemple de l'air. Les éléments porteurs 32 sont deux à deux indépendants dans l'espace annulaire intérieur 52.

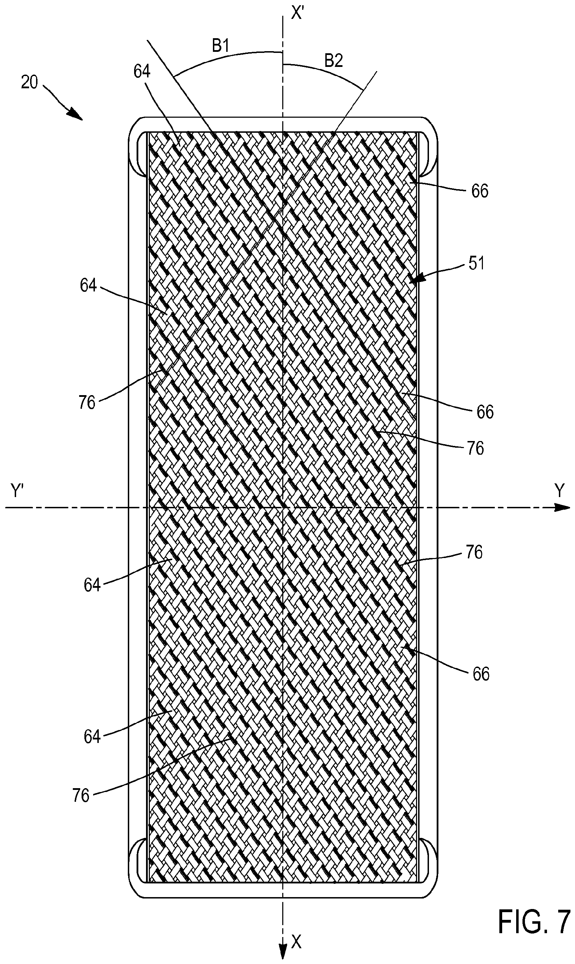

Dans ce premier mode de réalisation, l'assemblage 24 s'étend axialement de façon continue entre les deux flancs 50 du pneumatique 20. L'assemblage 24 s'étend circonférentiellement sur un tour autour de l'axe de révolution YY' du pneumatique 20 de façon à former une bande d'assemblage 51 axialement continue comme illustré sur la figure 7.

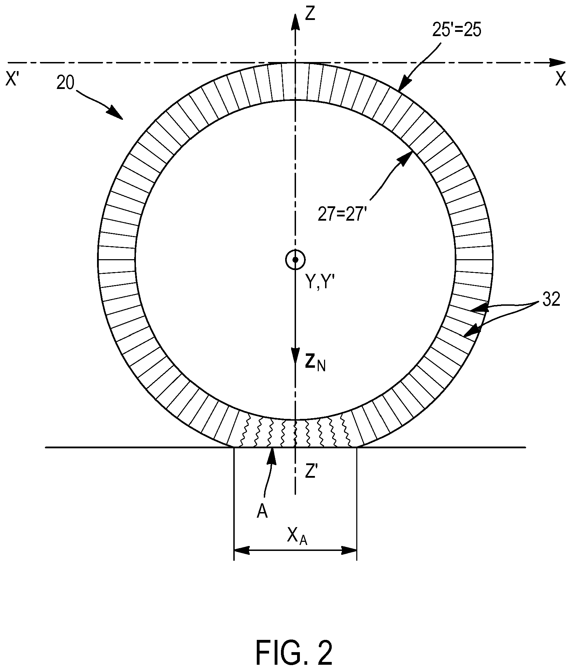

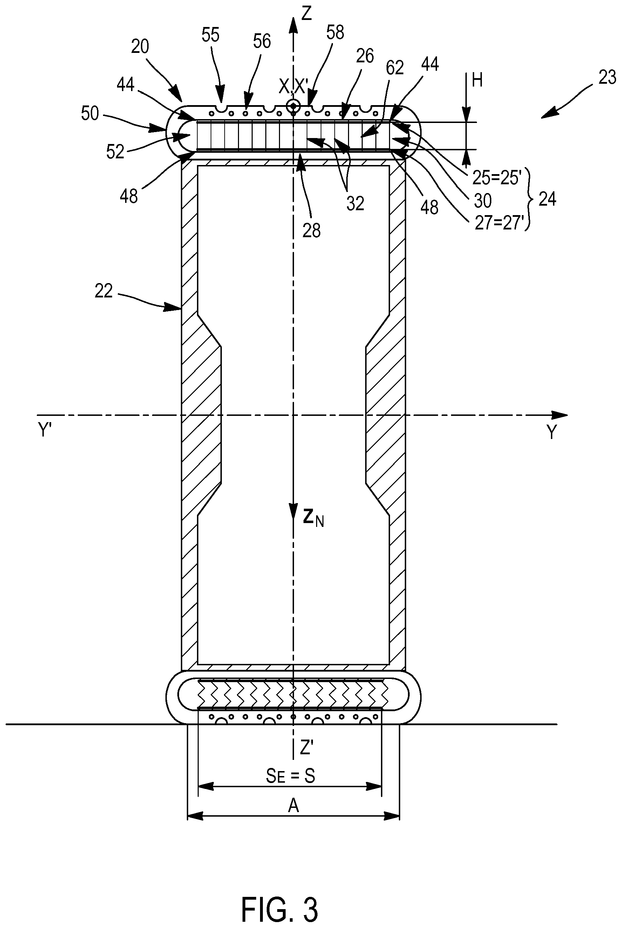

Sur les figures 2 et 3, le pneumatique 20 est représenté soumis à une charge radiale nominale Z_{N}. Le pneumatique 20 est en contact avec un sol plan par une surface de contact A, ayant une longueur circonférentielle X_{A}. Les éléments porteurs 32, reliés à la portion de la première structure tissée imprégnée 25 formant la première structure de révolution radialement extérieure 25' du pneumatique 20 en contact avec le sol par l'intermédiaire de la bande de roulement, sont soumis à flambage en compression, alors qu'au moins une partie des éléments porteurs 32, reliés à la portion de la première structure tissée imprégnée 25 formant la première structure de révolution radialement extérieure 25' du pneumatique 20 non en contact avec le sol, sont en tension.

On a représenté sur la figure 4, une face externe 53 du premier tissu 26 avant sa mise dans le pneumatique 20. On a volontairement omis de représenter la première couche 33 de composition polymérique 34 pour des raisons de clarté de l'exposé. On a représenté sur la figure 5 un assemblage et un ensemble 90 selon l'invention.

Le premier tissu 26 est un tissu comprenant des entrecroisements d'une première famille de premiers éléments filaires 64, appelés premiers éléments filaires de chaine, et d'une deuxième famille de premiers éléments filaires 66, appelés premiers éléments filaires de trame. Les premiers éléments filaires de chaine 64 du premier tissu 26 sont sensiblement parallèles entre eux et s'étendent selon une direction dite de chaine. Les premiers éléments filaires de trame 66 du premier tissu 26 sont sensiblement parallèles entre eux et s'étendent selon une direction dite de trame. Les premiers éléments filaires 64, 66 sont revêtus d'au moins une couche d'une première composition adhésive réticulée et sont obtenus après une étape de revêtement individuel de chaque premier élément filaire 64, 66 par la couche de la première composition adhésive suivi d'une étape de traitement thermique individuel de chaque premier élément filaire revêtu 64, 66. En l'espèce, chaque premier élément filaire 64, 66 est revêtu d'une couche d'un premier primaire d'adhésion, ici un primaire à base d'une résine époxy et d'isocyanate bloqué, cette couche de primaire d'adhésion étant elle-même revêtue de la couche de la première composition adhésive, ici une colle de type RFL.

Le deuxième tissu 28 est un tissu comprenant des entrecroisements d'une première famille de deuxièmes éléments filaires 68, appelés deuxièmes éléments filaires de chaine, et d'une deuxième famille de deuxièmes éléments filaires 70, appelés deuxièmes éléments filaires de trame. Les deuxièmes éléments filaires de chaine 68 du deuxième tissu 28 sont sensiblement parallèles entre eux et s'étendent selon une direction dite de chaine. Les deuxièmes éléments filaires de trame 70 du deuxième tissu 28 sont sensiblement parallèles entre eux et s'étendent selon une direction dite de trame. Les deuxièmes éléments filaires 68, 70 sont revêtus d'au moins une couche d'une deuxième composition adhésive réticulée et sont obtenus après une étape de revêtement individuel de chaque deuxième élément filaire 68, 70 par la couche de la deuxième composition adhésive suivi d'une étape de traitement thermique individuel de chaque deuxième élément filaire revêtu 68, 70. En l'espèce, chaque deuxième élément filaire 68, 70 est revêtu d'une couche d'un deuxième primaire d'adhésion, ici un primaire à base d'une résine époxy et d'isocyanate bloqué, cette couche de primaire d'adhésion étant elle-même revêtue de la couche de la deuxième composition adhésive, ici une colle de type RFL.

En l'espèce, les premier et deuxième primaires d'adhésion sont identiques. Les première et deuxième compositions adhésives sont identiques.

Au sein de chaque premier et deuxième tissu 26, 28, les directions de chaine et de trame forment l'une avec l'autre un angle allant de 70° à 90°. En l'espèce, l'angle est sensiblement égal à 90°.

Les premier et deuxième éléments filaires 64, 66, 68, 70 sont tous sensiblement identiques. Chaque premier et deuxième élément filaire 64, 66, 68, 70 est un élément filaire textile, ici réalisé en polyéthylène téréphtalate (PET). En l'espèce, chaque premier et deuxième élément filaire 64, 66, 68, 70 est un élément filaire filé présentant une masse linéique égale à 170 tex et une ténacité égale à 66 cN/tex.

Les éléments porteurs 32 sont des éléments filaires porteurs. Chaque élément filaire porteur 32 s'étend alternativement du premier tissu 26 vers le deuxième tissu 28 et du deuxième tissu 28 vers le premier tissu 26 lorsqu'on se déplace le long de l'élément filaire porteur 32. En outre, chaque élément filaire porteur 32 est entrelacé avec le premier tissu 26 et le deuxième tissu 28. Chaque élément filaire porteur 32 est un élément filaire porteur textile, ici réalisé en polyéthylène téréphtalate (PET). En l'espèce, chaque élément porteur est un élément filaire filé présentant une masse linéique égale à 55 tex et une ténacité égale à 54 cN/tex. Dans le mode de réalisation décrit les éléments filaires porteurs 32 sont dépourvus de toute couche de composition adhésive.

Chaque élément filaire porteur 32 comprend une portion filaire porteuse 74 s'étendant entre les premier et deuxième tissus 26, 28, notamment entre les faces internes 42 et 46. Chaque élément filaire porteur 32 comprend des première et deuxième portions filaires d'ancrage 76, 78 de l'élément filaire porteur 32 respectivement dans le premier tissu 26 et le deuxième tissu 28. Chaque première et deuxième portions filaires d'ancrage 76, 78 prolonge une portion porteuse 74 respectivement dans chaque premier tissu 26 et deuxième tissu 28. Chaque première et deuxième portion filaire d'ancrage 76, 78 est enroulée au moins en partie autour de plusieurs éléments filaires des premières familles d'éléments filaires 64, 68 de chaine respectivement de chaque premier tissu 26 et chaque deuxième tissu 28. Ainsi, chaque portion filaire d'ancrage 76, 78 relie deux portions filaires porteuses 74 entre elles.

Sur les figures 4 et 7, on voit les portions filaires d'ancrage 76 des éléments filaires porteurs 32.

Sur la figure 4, le premier tissu 26 et le deuxième tissu 28 s'étendent tous les deux selon une direction générale principale G sensiblement parallèle aux bords longitudinaux des premier et deuxième tissus 26, 28. Les premiers éléments filaires de chaine 64 du premier tissu radialement extérieur 26 s'étendent selon une direction formant, avec la direction générale principale du premier tissu 26, un angle A1 au moins égal à 10° et au plus égal à 45°. Les premiers éléments filaires de trame 66 du premier tissu radialement extérieur 26 s'étendent selon une direction formant, avec la direction générale principale du premier tissu 26, un angle A2 au moins égal à 10° et au plus égal à 45°.

De façon analogue, les deuxièmes éléments filaires de chaine 68 du deuxième tissu radialement intérieur 28 s'étendent selon une direction formant, avec la direction générale principale du deuxième tissu radialement intérieur 28, un angle A3 au moins égal à 10° et au plus égal à 45°. Les deuxièmes éléments filaires de trame 70 du deuxième tissu radialement intérieur 28 s'étendent selon une direction formant, avec la direction générale principale du premier tissu 26, un angle A4 au moins égal à 10° et au plus égal à 45°. En l'espèce, A1=A2=A3=A4=45°.

On a représenté sur la figure 6 une portion filaire porteuse 74 d'un élément filaire porteur 32. La portion filaire porteuse 74 présente une section moyenne S_{P} circulaire, définie par une plus petite dimension caractéristique E et une plus grande dimension caractéristique L toutes deux égales, dans l'exemple présenté, au diamètre du cercle, et caractérisée par son rapport de forme K égal à L/E, donc égal à 1 dans le cas présent. En outre, la plus petite dimension caractéristique E de la section moyenne S_{P} de la portion filaire porteuse 74, c'est-à-dire, dans le cas présent, son diamètre, est au plus égale à 0.02 fois la hauteur radiale moyenne H de l'espace annulaire intérieur 52. La portion porteuse 74 a une longueur L_{P} au moins égale à la hauteur moyenne H de l'espace annulaire intérieur 52. Les portions filaires d'ancrage 76, 78 présentent la même section moyenne S_{P} circulaire et la même plus petite dimension caractéristique E de la section moyenne S_{P}.

Sur la figure 7, on a représenté partiellement le pneumatique 20 de façon à voir la face externe 53 du premier tissu 26 lorsque celui-ci est agencé au sein du pneumatique 20.

Les premiers éléments filaires de chaine 64 du premier tissu 26 s'étendent selon une direction formant, avec la direction circonférentielle XX' du pneumatique 20, un angle B1 inférieur à l'angle A1. De même, les premiers éléments filaires de trame 66 du premier tissu 26 s'étendent selon une direction formant, avec la direction circonférentielle XX' du pneumatique 20, un angle B2 inférieur à l'angle A2.

Les deuxièmes éléments filaires de chaine 68 du deuxième tissu radialement intérieur 28 s'étendent selon une direction formant, avec la direction circonférentielle XX' du pneumatique 20, un angle B3. De même, les deuxièmes éléments filaires de trame 70 du deuxième tissu radialement intérieur 28 s'étendent selon une direction formant, avec la direction circonférentielle XX' du pneumatique 20, un angle B4.

En l'espèce, chaque angle B1, B2 est respectivement inférieur à chaque angle A1, A2 et est au moins égal à 10° et inférieur à 45° et ici B1=B2=38°. Chaque angle B3, B4 est respectivement sensiblement égal à chaque angle A3, A4 et est au moins égal à 10° et inférieur ou égal à 45° et ici B3=B4=45°.

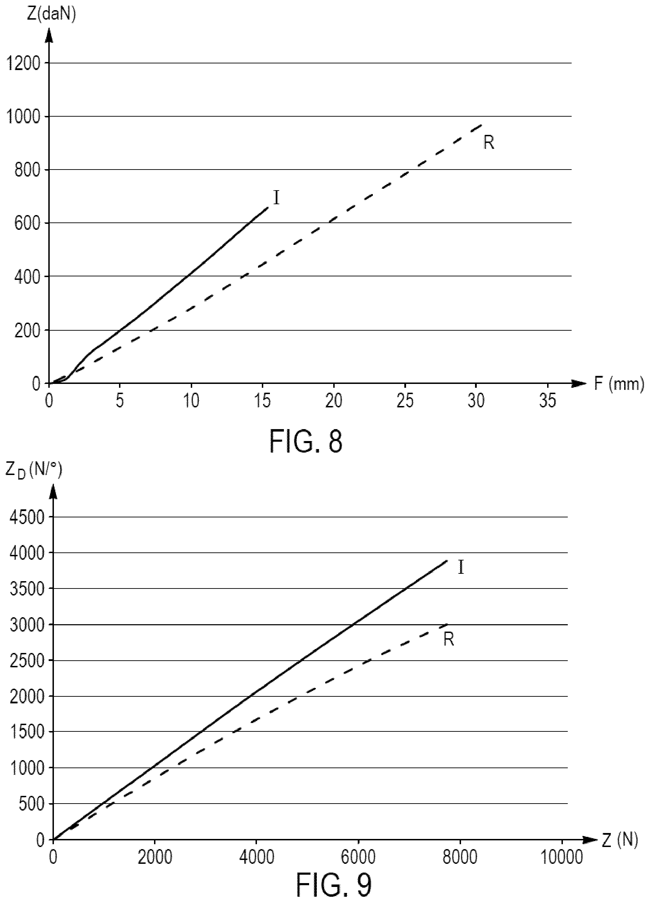

Le pneumatique 20 dont les caractéristiques de rigidités sont présentées sur les figures 8 et 9 comprend des première et deuxième structures de révolution radialement extérieure et radialement intérieure 25', 27' ayant des rayons moyens respectifs égaux à 333 mm et 298 mm, et des largeurs axiales toutes deux égales à 250 mm. L'espace annulaire intérieur 52 a une hauteur radiale moyenne H égale à 35 mm. Le pneumatique 20 est gonflé a une pression P comprise entre 1.5 bar et 2.5 bars et est soumis à une charge radiale Z_{N} égale à 600 daN.

La figure 8 présente deux courbes-types comparées de l'évolution de la charge appliquée Z, exprimée en daN, en fonction de la flèche F, exprimée en mm, pour un pneumatique selon l'invention I et un pneumatique de référence R de l'état de la technique. La figure 8 montre que, pour une charge radiale donnée Z, la flèche F d'un pneumatique selon l'invention I est plus petite que celle du pneumatique de référence R. Autrement dit, la rigidité radiale du pneumatique selon l'invention I est plus grande que la rigidité radiale du pneumatique de référence R.

La figure 9 présente deux courbes-types comparées de l'évolution de la rigidité de dérive Z_{D}, exprimée en N/°, en fonction de la charge appliquée, exprimée en N, pour un pneumatique selon l'invention I et un pneumatique de référence R de l'état de la technique. La figure 9 montre que, pour une charge radiale donnée Z, la rigidité de dérive Z_{D} d'un pneumatique selon l'invention I est plus grande que celle du pneumatique de référence R.

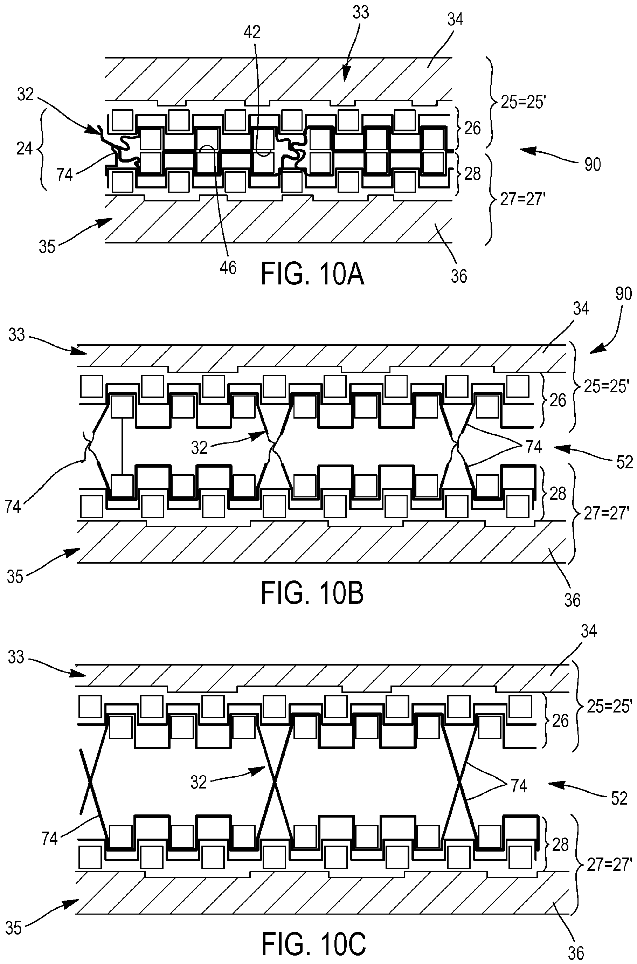

On va maintenant décrire un procédé de fabrication selon l'invention en référence aux figures 10A, 10B et 10C.

Dans une étape préalable à la formation de l'assemblage 24, on revêt chaque premier et deuxième élément filaire 64, 66, 68, 70 des couches de primaire d'adhésion et de composition adhésive. Pour ce faire, on revêt tout d'abord directement les premiers et deuxièmes éléments filaires 64, 66, 68, 70 de la couche de primaire d'adhésion dans un premier bain aqueux (environ 94% d'eau) à base de résine époxy (polyglycérol polyglycidyl éther, environ 1%) et de composé isocyanate (bloqué caprolactame, environ 5%). Puis, on revêt la couche de primaire d'adhésion de la couche de composition adhésive, ici une colle RFL (environ 81% en poids d'eau) à base de résorcinol (environ 2%), formol (environ 1%) et d'un latex de caoutchouc (environ 16% de caoutchoucs NR, SBR et VP-SBR). Puis, on sèche les couches de primaire et de composition d'adhésion, par exemple dans un four de séchage à 140 °C pendant 30 s. Puis, on traite thermiquement les premiers et deuxièmes éléments filaires revêtus 64, 66, 68, 70 de façon à réticuler les couche de primaire et de composition d'adhésion par passage des premiers et deuxièmes éléments filaires 64, 66, 68, 70 revêtus dans un four de traitement à 240 °C pendant 30 s.

Puis, dans une étape de formation de l'assemblage 24, on assemble les premiers éléments filaires 64, 66 de façon à former le premier tissu 26 et les deuxièmes éléments filaires 68, 70 de façon à former le deuxième tissu 28. On assemble également les éléments porteurs 32 avec les premier et deuxième tissus 26, 28. Dans le mode de réalisation décrit en exemple, on assemble en une seule étape, et donc simultanément, les premiers et deuxièmes éléments filaires 64, 66, 68, 70 revêtus et traités thermiquement avec les éléments porteurs 32 de façon à former l'assemblage 24. Dans un autre mode de réalisation, on forme tout d'abord séparément chaque premier et deuxième tissu 26, 28, puis on relie entre eux les premier et deuxième tissus 26, 28 avec les éléments porteurs 32. L'étape de formation de l'assemblage 24 selon l'invention est mise en oeuvre d'une façon connue par l'homme du métier des tissus tramés.

Puis, dans une étape d'imprégnation des premier et deuxième tissus 26, 28, on imprègne chaque premier et deuxième tissu 26, 28 respectivement avec les première et deuxième compositions polymériques 34, 36 de façon à former les première et deuxième bandes 33, 35 et à constituer les première et deuxième structures tissées imprégnées 25, 27.

On obtient alors l'ensemble 90 selon l'invention représenté sur la figure 10A. La force à rupture Fs surfacique des portions filaires porteuses 74, et par extension des éléments porteurs 32, est définie par Fs=Fr.D dans laquelle Fr est la force à rupture, en N, de chaque portion filaire porteuse 74 et D la densité surfacique moyenne des portions filaires porteuses 74 par unité de surface de première structure tissée imprégnée 25, exprimée en 1/m2.

Dans l'exemple du premier mode de réalisation, les éléments filaires porteurs 32 sont individuellement identiques. Chaque élément porteur 32 est réalisé en polyéthylène téréphtalate (PET) et présente une section moyenne S_{P} égale à 7^{∗}10⁻⁸ m² et une contrainte à rupture Fᵣ/S_{P} égale à 470 MPa. La densité surfacique moyenne D des portions filaires porteuses 74 par unité de surface de la première structure tissée imprégnée 25 et par unité de surface de la deuxième structure tissée imprégnée 27 est égale à 85000 fils/m². La force à rupture Fr est égale à 33 N.

On dispose d'un cylindre de confection dont le diamètre est égal à celui du moyen de montage sur lequel est destiné à être monté le pneumatique 20. Le cylindre de confection est sensiblement de révolution autour d'un axe de révolution coaxial à l'axe de révolution YY' du pneumatique 20. On enroule autour de ce cylindre de confection l'ensemble 90 de la figure 10A. L'ensemble 90 selon l'invention forme alors un enroulement cylindrique axialement continu, autour de l'axe de révolution YY' du pneumatique 20 dont la largeur axiale est supérieure ou égale à 50%, de préférence à 75% de la largeur axiale de la bande de roulement 58. Dans ce cas, l'ensemble 90 est déposé selon un seul tour d'enroulement cylindrique. On parle alors de pose en pleine largeur, puisque la largeur axiale visée de l'ensemble 90 est obtenue en un seul tour d'enroulement cylindrique. L'avantage d'une pose en pleine largeur est la productivité de fabrication. En revanche, une pose en pleine largeur implique nécessairement l'existence d'au moins une zone de recouvrement, ou soudure, selon la direction circonférentielle, entre les extrémités circonférentielles de l'ensemble 90, en particulier en fin d'enroulement. L'ensemble 90 est posé de sorte que les éléments filaires de chaîne 64, 68 et de trame 66, 70, sensiblement perpendiculaires entre eux, forment, avec la direction circonférentielle XX' du pneumatique 20, des angles A1, A2, A3, A4 sensiblement égaux à 45°.

Puis, on forme l'espace annulaire intérieur 52. Pour ce faire, dans le mode de réalisation décrit, on joint chaque flanc 50 à chaque extrémité axiale 44, 48 de la première structure tissée imprégnée 25 et de la deuxième structure tissée imprégnée 27 de façon à constituer l'espace annulaire intérieur 52.

Puis, on écarte radialement par rapport à l'axe de révolution du pneumatique 20 au moins une des première et deuxième structures tissées imprégnées 25, 27, en l'espèce uniquement la première structure tissée imprégnée 25. Pour ce faire, dans le mode de réalisation décrit, on déploie l'espace annulaire intérieur 52 par pressurisation par un gaz de gonflage de l'espace annulaire intérieur 52, par exemple de l'air. On obtient alors l'ensemble 90 selon l'invention représenté sur la figure 10B. Chaque portion filaire porteuse 74 est toujours dans un état replié ou fléchi.

Ensuite, en continuant d'écarter radialement par rapport à l'axe de révolution YY' du pneumatique 20 au moins une des première et deuxième structures tissées imprégnées 25, 27, en l'espèce uniquement la première structure tissée imprégnée 25, on déploie l'espace annulaire intérieur 52 par pressurisation par le gaz de gonflage. On obtient alors l'ensemble représenté sur la figure 10C dans lequel chaque portion filaire porteuse 74 est dans un état sensiblement tendu.

Lors de l'écartement radial d'au moins une des première et deuxième structures tissées imprégnées 25, 27 par rapport à l'axe de révolution YY' du pneumatique 20, généralement appelé conformation, le diamètre de la première structure tissée imprégnée 25 formant la première structure de révolution radialement extérieure 25' du pneumatique 20, et donc du premier tissu 26, augmente alors que le diamètre de la deuxième structure tissée imprégnée 27 formant la deuxième structure de révolution radialement intérieure 27' du pneumatique 20, et donc du deuxième tissu 28, reste sensiblement constant. La distance radiale par rapport à l'axe de révolution YY' du pneumatique 20 du premier tissu 26 augmente de façon significative au cours de la conformation ainsi que sa longueur circonférentielle et les angles formés par les premiers éléments filaires de chaîne 64 et de trame 66, avec la direction circonférentielle XX' du pneumatique 20, initialement égaux à 45°, diminuent et deviennent au moins égal à 10° et au plus égal à 45°, après conformation, ici égal à B1=B2=38°. La distance radiale par rapport à l'axe de révolution YY' du pneumatique 20 du deuxième tissu 28 reste sensiblement constante au cours de la conformation, sa longueur circonférentielle ne varie sensiblement pas et les angles formés par les deuxièmes éléments filaires de chaîne 68 et de trame 70 avec la direction circonférentielle XX' du pneumatique 20, initialement égal à 45°, restent sensiblement égal à 45°, après conformation, ici B3=B4=45°.

Puis, on enroule la structure de révolution de sommet 55 radialement à l'extérieur de la première structure tissée imprégnée 25 formant la première structure de révolution radialement extérieure 25'.

Ensuite, on dépressurise l'espace annulaire intérieur 52 jusqu'à la pression atmosphérique ambiante. On obtient alors le pneumatique 20 à l'état cru. Enfin, on réticule le pneumatique 20, par exemple par vulcanisation, afin d'obtenir le pneumatique 20 à l'état cuit.

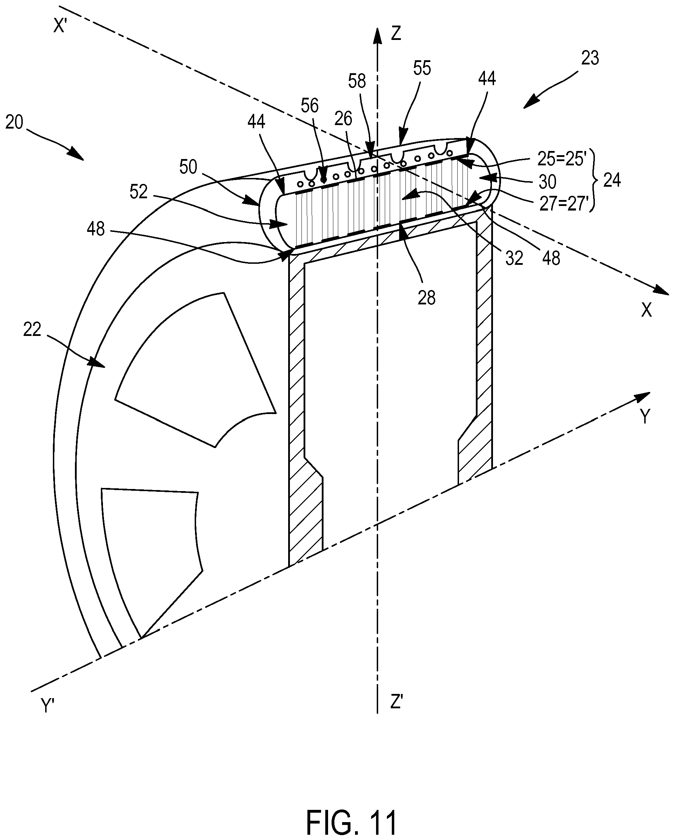

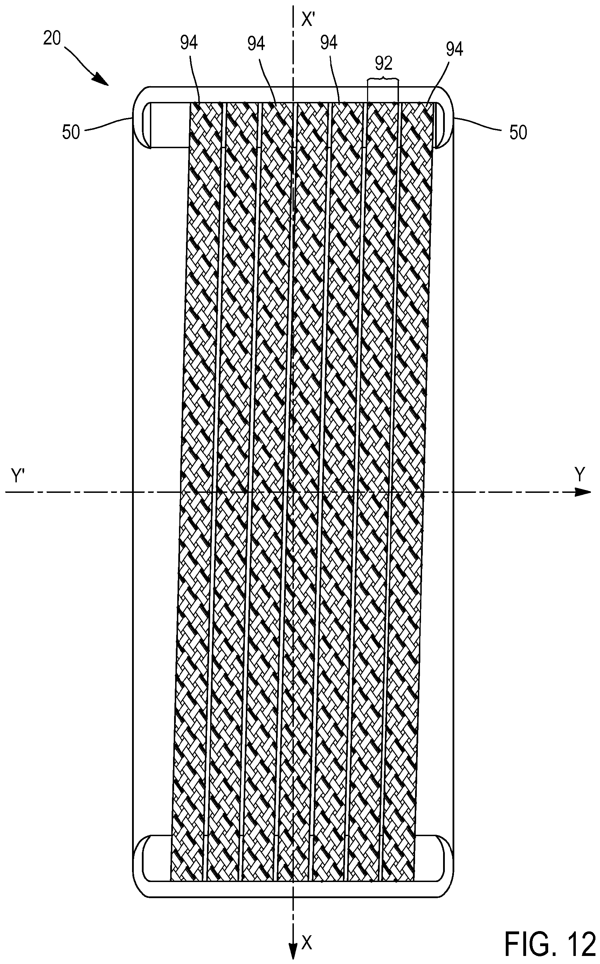

On a représenté sur les figures 11 et 12 un pneumatique 20 selon un deuxième mode de réalisation. Les éléments analogues à ceux représentées sur les figures précédentes sont désignés par des références identiques.

A la différence du pneumatique selon le premier mode de réalisation, dans le pneumatique 20 selon le deuxième mode de réalisation, l'assemblage 24 s'étend axialement de façon discontinue entre les deux flancs 50 du pneumatique 20. L'assemblage 24 s'étend circonférentiellement sur plusieurs tours autour de l'axe de révolution YY' du pneumatique 20 de façon à former un enroulement d'une bandelette d'assemblage 92 axialement discontinue.

Ainsi, comme cela est illustré sur la figure 12, l'ensemble 90 est enroulé autour de l'axe du pneumatique 20 de façon à former un enroulement hélicoïdal d'une bandelette d'assemblage 92, les portions axiales 94 de la bandelette 92 étant axialement juxtaposées. Par bandelette, on entend un ensemble 90 ayant une largeur axiale limitée, au plus égale à 30% de la largeur axiale de la bande de roulement 58, et de grande longueur au moins égale à deux fois la circonférence de la bande de roulement 58, de façon à ce que la bandelette à poser puisse être stockée sous forme de rouleau. Une telle bandelette est ainsi déroulée selon une hélice, ayant pour axe de révolution l'axe de révolution du pneumatique 20. Le nombre de tours d'enroulement hélicoïdal de la bandelette est déterminé par la largeur axiale totale de l'enroulement hélicoïdal visée et par la densité d'éléments porteurs 32. La pose de la bandelette peut être jointive, c'est-dire que les portions de bandelette sont en contact deux à deux par leurs bords axiaux, ou non jointives, c'est-à-dire que les bords axiaux des portions axiales 94 de bandelette sont espacées d'un espace sensiblement non nul. L'avantage d'une pose en bandelette est l'absence de zones de recouvrement, ou soudures, selon la direction circonférentielle, entre des portions axiales de bandelette, en fin d'enroulement.

Dans une conception de type bandelette, la surface de liaison S_{E} de la face externe 43 de la première structure tissée imprégnée 25 formant la première structure de révolution radialement extérieure 25' du pneumatique 20 tissu radialement extérieur avec la face radialement intérieure 59 de la structure de révolution de sommet 55 est la somme des surfaces de liaison des portions axiales 94 de bandelette 92 juxtaposés.

La bandelette 92 est enroulée hélicoïdalement autour de l'axe de révolution du pneumatique 20 de sorte que, avant conformation, les premiers éléments filaires de chaine 64 et de trame 66 du premier tissu 26 s'étendent selon une direction formant avec la direction circonférentielle XX', respectivement un angle A1, A2 au moins égal à 10° et au plus égal à 45° et de sorte que les deuxièmes éléments filaires de chaine 68 et de trame 70 du deuxième tissu radialement intérieur 28 s'étendent selon une direction formant, avec la direction générale principale du deuxième tissu radialement intérieur 28, respectivement un angle A3, A4 au moins égal à 10° et au plus égal à 45°. En l'espèce, A1=A2=A3=A4=45°.

Comme dans le premier mode de réalisation, après conformation, les angles formés par les premiers éléments filaires de chaîne 64 et de trame 66, avec la direction circonférentielle XX', initialement égal à 45°, diminuent et deviennent au moins égaux à 10° et au plus égaux à 45°, après conformation, ici égaux à B1=B2=38°. Les angles formés par les deuxièmes éléments filaires de chaîne 68 et de trame 70 avec la direction circonférentielle XX' du pneumatique 20, initialement égaux à 45°, restent sensiblement égaux à 45°.

L'invention ne se limite pas aux modes de réalisation décrits ci-dessus.

On pourra envisager le mode de réalisation dans lequel :
- on revêt chaque élément filaire porteur d'au moins une couche d'une troisième composition adhésive,
- puis, on traite thermiquement chaque élément filaire porteur revêtu de façon à réticuler la troisième composition adhésive,
- puis, on assemble chaque élément filaire porteur revêtu et traité thermiquement avec les premier et deuxième éléments filaires de façon à former l'assemblage.

Ainsi, dans ce mode de réalisation, chaque élément filaire porteur est revêtu d'au moins une couche d'une troisième composition adhésive réticulée et est obtenu après une étape de revêtement individuel de chaque élément filaire porteur par la couche de la troisième composition adhésive suivi d'une étape de traitement thermique individuel de chaque élément filaire porteur revêtu.

Dans ce mode de réalisation, lors de l'étape de formation de l'assemblage, on assemble chaque élément filaire porteur revêtu et traité thermiquement avec les premier et deuxième éléments filaires revêtu et traité thermiquement de façon à former l'assemblage.

## Revendications

1. Procédé de fabrication d'un assemblage (24) pour pneumatique (20), **caractérisé en ce que,** l'assemblage (24) comprenant :
- un premier tissu ou tricot (26) comprenant un ou plusieurs premiers éléments filaires (64, 66),
- un deuxième tissu ou tricot (28) comprenant un ou plusieurs deuxièmes éléments filaires (68, 70),
- une structure porteuse (30) comprenant des éléments porteurs (32) reliant les premier et deuxième tissu(s) ou tricot(s) (26, 28) entre eux,
procédé dans lequel :
- on revêt chaque premier élément filaire (64, 66) d'au moins une couche d'une première composition adhésive et on revêt chaque deuxième élément filaire (68, 70) d'au moins une couche d'une deuxième composition adhésive,
- puis, on traite thermiquement chaque premier et deuxième élément filaire (64, 66, 68, 70) revêtu de façon à réticuler chaque première et deuxième composition adhésive,
- puis, on assemble chaque premier et deuxième élément filaire (64, 66, 68, 70) revêtu et traité thermiquement avec les éléments porteurs (32) de façon à former l'assemblage (24).

2. Procédé selon la revendication 1, dans lequel les première et deuxième compositions adhésives réticulées sont sensiblement identiques.

3. Procédé selon l'une quelconque des revendications précédentes, dans lequel chaque premier et deuxième élément filaire (64, 66, 68, 70) est textile.

4. Procédé selon l'une quelconque des revendications précédentes, dans lequel chaque élément porteur (32) est un élément filaire porteur (32).

5. Procédé selon l'une quelconque des revendications précédentes, dans lequel chaque élément filaire porteur (32) est textile.

6. Procédé selon la revendication 4 ou 5, dans lequel chaque élément filaire porteur (32) s'étend alternativement du premier tissu ou tricot (26) vers le deuxième tissu ou tricot (28) et du deuxième tissu ou tricot (28) vers le premier tissu ou tricot (26) lorsqu'on se déplace le long de l'élément filaire porteur (32).

7. Procédé selon l'une quelconque des revendications 4 à 6, dans lequel chaque élément filaire porteur (32) est entrelacé avec chaque premier et deuxième tissu ou tricot (26, 28).

8. Procédé selon l'une quelconque des revendications 4 à 7, dans lequel chaque élément filaire porteur (32) comprend :
- au moins une portion filaire porteuse (74) s'étendant entre les premier et deuxième tissu(s) ou tricot(s) (26, 28), et
- au moins des première et deuxième portions filaires d'ancrage (76, 78) de l'élément filaire porteur (32) respectivement dans les premier et deuxième tissu(s) ou tricot(s) (26, 28), prolongeant la portion filaire porteuse (74) respectivement dans les premier et deuxième tissu(s) ou tricot(s) (26, 28).

9. Procédé selon l'une quelconque des revendications précédentes, dans lequel on revêt directement chaque premier élément filaire (64, 66) d'une couche d'un premier primaire d'adhésion et on revêt la couche du premier primaire d'adhésion de la couche de la première composition adhésive.

10. Procédé selon l'une quelconque des revendications précédentes, dans lequel on revêt directement chaque deuxième élément filaire (68, 70) d'une couche d'un deuxième primaire d'adhésion et on revêt la couche du deuxième primaire d'adhésion de la couche de la deuxième composition adhésive.

11. Procédé selon l'une quelconque des revendications précédentes, dans lequel chaque élément porteur (32) étant un élément filaire porteur (32) :
- on revêt chaque élément filaire porteur (32) d'au moins une couche d'une troisième composition adhésive,
- puis, on traite thermiquement chaque élément filaire porteur (32) revêtu de façon à réticuler la troisième composition adhésive,
- puis, on assemble chaque élément filaire porteur (32) revêtu et traité thermiquement avec les premier et deuxième éléments filaires (64, 66, 68, 70) revêtus et traités thermiquement de façon à former l'assemblage (24).

12. Procédé de fabrication d'un pneumatique (20), **caractérisé en ce que** :
- on enroule autour d'un cylindre de confection sensiblement de révolution autour d'un axe de révolution un assemblage (24) ou un ensemble (90) :
∘ l'assemblage (24) comprenant:
▪ un premier tissu ou tricot (26) comprenant un ou plusieurs premiers éléments filaires (64, 66), chaque premier élément filaire (64, 66) étant revêtu d'au moins une couche d'une première composition adhésive réticulée,
▪ un deuxième tissu ou tricot (28) comprenant un ou plusieurs deuxièmes éléments filaires (68, 70), chaque deuxième élément filaire (68, 70) étant revêtu d'au moins une couche d'une deuxième composition adhésive réticulée,
▪ une structure porteuse (30) comprenant des éléments porteurs (32) reliant les premier et deuxième tissu(s) ou tricot(s) (26, 28) entre eux,
l'assemblage (24) étant susceptible d'être obtenu par un procédé selon l'une quelconque des revendications précédentes,
∘ l'ensemble comprenant :
▪ des première et deuxième couches (33, 35) respectivement de première et deuxième compositions polymériques (34, 36) ;
▪ l'assemblage (24) dans lequel :
le premier tissu ou tricot (26) est imprégné au moins en partie de la première composition polymérique (34) et forme une première structure tissée ou tricotée imprégnée (25) de l'ensemble (90);
le deuxième tissu ou tricot (28) est imprégné au moins en partie de la deuxième composition polymérique (36) et forme une deuxième structure tissée ou tricotée imprégnée (27) de l'ensemble (90).
le pneumatique comprenant :
∘ une première structure de révolution (25') comprenant le premier tissu ou tricot (26) et une première couche d'une première composition polymérique (34), le premier tissu ou tricot (26) étant imprégné au moins en partie de la première composition polymérique ;
∘ une deuxième structure de révolution (27') comprenant le deuxième tissu ou tricot (28) et une deuxième couche d'une deuxième composition polymérique (36), le deuxième tissu ou tricot (28) étant imprégné au moins en partie de la deuxième composition polymérique, la deuxième structure de révolution (27') étant agencée radialement à l'intérieur de la première structure de révolution (25') ;
∘ un espace annulaire intérieur (52) délimité par une face interne (42) de la première structure de révolution (25') et une face interne (46) de la deuxième structure de révolution (27') ;
∘ deux flancs (50) reliant entre elles chaque extrémité axiale (44) de la première structure de révolution (25') et chaque extrémité axiale (48) de la deuxième structure de révolution (27'), les deux flancs (50) délimitant l'espace annulaire intérieur (52); l'espace annulaire intérieur (52) formant une cavité fermée pouvant être pressurisée par un gaz de gonflage ;
- on forme l'espace annulaire,
- on écarte radialement par rapport à l'axe de révolution au moins un des premier et deuxième tissu ou tricot (26, 28) de façon à on déployer l'espace annulaire intérieur (52).

13. Procédé selon la revendication précédente, dans lequel, pour former l'espace annulaire intérieur (52), on joint chaque flanc (50) à chaque extrémité axiale (44, 48) des première et deuxième structures de révolution (25', 27') de façon à constituer l'espace annulaire intérieur (52).

14. Procédé selon la revendication 12 ou 13, dans lequel on déploie l'espace annulaire intérieur (52) par pressurisation par un gaz de gonflage de l'espace annulaire intérieur (52).

15. Procédé selon l'une quelconque des revendications 12 à 14, dans lequel après le déploiement de l'espace annulaire intérieur (52), on enroule une structure de révolution de sommet (55) radialement à l'extérieur de la première structure de révolution (25').

## Patentansprüche

1. Verfahren zur Herstellung einer Anordnung (24) für einen Reifen (20), **dadurch gekennzeichnet, dass** die Anordnung (24) umfasst:
- ein erstes Gewebe oder Gewirk (26), das ein oder mehrere erste fadenförmige Elemente (64, 66) umfasst,
- ein zweites Gewebe oder Gewirk (28), das ein oder mehrere zweite fadenförmige Elemente (68, 70) umfasst,
- eine tragende Struktur (30), die tragende Elemente (32) umfasst, welche die ersten und zweiten Gewebe oder Gewirke (26, 28) untereinander verbinden,
bei dem:
- man jedes erste fadenförmige Element (64, 66) mit mindestens einer Schicht einer ersten Haftzusammensetzung überzieht und man jedes zweite fadenförmige Element (68, 70) mit mindestens einer Schicht einer zweiten Haftzusammensetzung überzieht,
- man dann jedes erste und zweite überzogene fadenförmige Element (64, 66, 68, 70) derart wärmebehandelt, dass jede erste und zweite Haftzusammensetzung vernetzt wird,
- man dann jedes erste und zweite überzogene und wärmebehandelte fadenförmige Element (64, 66, 68, 70) derart mit den tragenden Elementen (32) zusammenfügt, dass die Anordnung (24) gebildet wird.

2. Verfahren nach Anspruch 1, bei dem die ersten und zweiten vernetzten Haftzusammensetzungen im Wesentlichen identisch sind.

3. Verfahren nach einem der vorhergehenden Ansprüche, bei dem jedes erste und zweite fadenförmige Element (64, 66, 68, 70) textil ist.

4. Verfahren nach einem der vorhergehenden Ansprüche, bei dem jedes tragende Element (32) ein tragendes fadenförmiges Element (32) ist.

5. Verfahren nach einem der vorhergehenden Ansprüche, bei dem jedes tragende fadenförmige Element (32) textil ist.

6. Verfahren nach Anspruch 4 oder 5, bei dem sich jedes tragende fadenförmige Element (32) alternierend vom ersten Gewebe oder Gewirk (26) zum zweiten Gewebe oder Gewirk (28) und vom zweiten Gewebe oder Gewirk (28) zum ersten Gewebe oder Gewirk (26) erstreckt, wenn man sich entlang des tragenden fadenförmigen Elements (32) bewegt.

7. Verfahren nach einem der Ansprüche 4 bis 6, bei dem jedes tragende fadenförmige Element (32) mit jedem ersten und zweiten Gewebe oder Gewirk (26, 28) verflochten ist.

8. Verfahren nach einem der Ansprüche 4 bis 7, bei dem jedes tragende fadenförmige Element (32) umfasst:
- mindestens einen tragenden fadenförmigen Abschnitt (74), der sich zwischen den ersten und zweiten Geweben oder Gewirken (26, 28) erstreckt, und
- mindestens erste und zweite fadenförmige Verankerungsabschnitte (76, 78) zur Verankerung des tragenden fadenförmigen Elements (32) in den ersten bzw. zweiten Geweben oder Gewirken (26, 28), wodurch der tragende fadenförmige Abschnitt (74) in die ersten bzw. zweiten Gewebe oder Gewirke (26, 28) verlängert wird.

9. Verfahren nach einem der vorhergehenden Ansprüche, bei dem man jedes erste fadenförmige Element (64, 66) direkt mit einer Schicht einer ersten Haftgrundierung überzieht und man die Schicht der ersten Haftgrundierung mit der Schicht der ersten Haftzusammensetzung überzieht.

10. Verfahren nach einem der vorhergehenden Ansprüche, bei dem man jedes zweite fadenförmige Element (68, 70) direkt mit einer Schicht einer zweiten Haftgrundierung überzieht und man die Schicht der zweiten Haftgrundierung mit der Schicht der zweiten Haftzusammensetzung überzieht.

11. Verfahren nach einem der vorhergehenden Ansprüche, bei dem, wenn jedes tragende Element (32) ein tragendes fadenförmiges Element (32) ist:
- man jedes tragende fadenförmige Element (32) mit mindestens einer Schicht einer dritten Haftzusammensetzung überzieht,
- man dann jedes überzogene tragende fadenförmige Element (32) derart wärmebehandelt, dass die dritte Haftzusammensetzung vernetzt wird,
- man dann jedes überzogene und wärmebehandelte tragende fadenförmige Element (32) mit den überzogenen und wärmebehandelten ersten und zweiten fadenförmigen Elementen (64, 66, 68, 70) derart zusammenfügt, dass die Anordnung (24) gebildet wird.

12. Verfahren zur Herstellung eines Reifens (20), **dadurch gekennzeichnet, dass**:
- man um einen Konfektionszylinder, der im Wesentlichen um eine Rotationsachse rotiert, eine Anordnung (24) oder einen Komplex (90) wickelt:
∘ wobei die Anordnung (24) umfasst:
▪ ein erstes Gewebe oder Gewirk (26), das ein oder mehrere erste fadenförmige Elemente (64, 66) umfasst, wobei jedes erste fadenförmige Element (64, 66) mit mindestens einer Schicht einer ersten vernetzten Haftzusammensetzung überzogen ist,
▪ ein zweites Gewebe oder Gewirk (28), das ein oder mehrere zweite fadenförmige Elemente (68, 70) umfasst, wobei jedes zweite fadenförmige Element (68, 70) mit mindestens einer Schicht einer zweiten vernetzten Haftzusammensetzung überzogen ist,
▪ eine tragende Struktur (30), die tragende Elemente (32) umfasst, welche die ersten und zweiten Gewebe oder Gewirke (26, 28) untereinander verbinden,
wobei die Anordnung (24) geeignet ist, mit einem Verfahren nach einem der vorhergehenden Ansprüche erhalten zu werden,
∘ wobei der Komplex umfasst:
▪ erste und zweite Schichten (33, 35) von ersten bzw. zweiten Polymerzusammensetzungen (34, 36);
▪ die Anordnung (24), in der:
das erste Gewebe oder Gewirk (26) zumindest teilweise mit der ersten Polymerzusammensetzung (34) imprägniert ist und eine erste imprägnierte gewebte oder gewirkte Struktur (25) des Komplexes (90) bildet;
das zweite Gewebe oder Gewirk (28) zumindest teilweise mit der zweiten Polymerzusammensetzung (36) imprägniert ist und eine zweite imprägnierte gewebte oder gewirkte Struktur (27) des Komplexes (90) bildet,
wobei der Reifen umfasst:
∘ eine erste Rotationsstruktur (25'), die das erste Gewebe oder Gewirk (26) und eine erste Schicht einer ersten Polymerzusammensetzung (34) umfasst, wobei das erste Gewebe oder Gewirk (26) zumindest teilweise mit der ersten Polymerzusammensetzung imprägniert ist;
∘ eine zweite Rotationsstruktur (27'), die das zweite Gewebe oder Gewirk (28) und eine zweite Schicht einer zweite Polymerzusammensetzung (36) umfasst, wobei das zweite Gewebe oder Gewirk (28) zumindest teilweise mit der zweiten Polymerzusammensetzung imprägniert ist, wobei die zweite Rotationsstruktur (27') radial innerhalb der ersten Rotationsstruktur (25') angeordnet ist;
∘ einen ringförmigen Innenraum (52), der durch eine Innenseite (42) der ersten Rotationsstruktur (25') und eine Innenseite (46) der zweiten Rotationsstruktur (27') begrenzt wird;
∘ zwei Flanken (50), die jedes axiale Ende (44) der ersten Rotationsstruktur (25') und jedes axiale Ende (48) der zweiten Rotationsstruktur (27') untereinander verbinden, wobei die beiden Flanken (50) den ringförmigen Innenraum (52) begrenzen, wobei der ringförmige Innenraum (52) einen geschlossenen Hohlraum bildet, der mit einem Aufblasgas druckbeaufschlagt werden kann;
- man den ringförmigen Raum bildet,
- man zumindest eines der ersten und zweiten Gewebe oder Gewirke (26, 28) radial von der Rotationsachse beabstandet, so dass der ringförmige Innenraum (52) gespreizt wird.

13. Verfahren nach dem vorhergehenden Anspruch, bei dem man zum Bilden des ringförmigen Innenraums (52) jede Flanke (50) an jedes axiale Ende (44, 48) der ersten und zweiten Rotationsstrukturen (25', 27') anfügt, so dass der ringförmige Innenraum (52) gebildet wird.

14. Verfahren nach Anspruch 12 oder 13, bei dem man den ringförmigen Innenraum (52) durch Druckbeaufschlagung des ringförmigen Innenraums (52) mit einem Aufblasgas spreizt.

15. Verfahren nach einem der Ansprüche 12 bis 14, bei dem man die erste Rotationsstruktur (25') nach dem Spreizen des ringförmigen Innenraums (52) radial außen mit einer Scheitelrotationsstruktur (55) umwickelt.

## Claims

1. Process for the manufacture of a tyre (20) assemblage (24), **characterized in that,** the assemblage (24) comprising:
- a first woven or knitted fabric (26) comprising one or more first threadlike elements (64, 66),
- a second woven or knitted fabric (28) comprising one or more second threadlike elements (68, 70),
- a bearing structure (30) comprising bearing elements (32) connecting the first and second woven or knitted fabric(s) (26, 28) together,
in which process:
- each first threadlike element (64, 66) is coated with at least one layer of a first adhesive composition and each second threadlike element (68, 70) is coated with at least one layer of a second adhesive composition,
- each first and second coated threadlike element (64, 66, 68, 70) is then heat treated, so as to crosslink each first and second adhesive composition,
- each first and second coated and heat-treated threadlike element (64, 66, 68, 70) is then assembled with the bearing elements (32), so as to form the assemblage (24).

2. Process according to Claim 1, in which the first and second crosslinked adhesive compositions are substantially identical.

3. Process according to either one of the preceding claims, in which each first and second threadlike element (64, 66, 68, 70) is textile.

4. Process according to any one of the preceding claims, in which each bearing element (32) is a threadlike bearing element (32).

5. Process according to any one of the preceding claims, in which each threadlike bearing element (32) is textile.

6. Process according to Claim 4 or 5, in which each threadlike bearing element (32) extends alternately from the first woven or knitted fabric (26) towards the second woven or knitted fabric (28) and from the second woven or knitted fabric (28) towards the first woven or knitted fabric (26), on moving along the threadlike bearing element (32).

7. Process according to any one of Claims 4 to 6, in which each threadlike bearing element (32) is interlaced with each first and second woven or knitted fabric (26, 28).

8. Process according to any one of Claims 4 to 7, in which each threadlike bearing element (32) comprises:
- at least one threadlike bearing portion (74) extending between the first and second woven or knitted fabric(s) (26, 28), and
- at least first and second threadlike portions (76, 78) for anchoring the threadlike bearing element (32) respectively in the first and second woven or knitted fabric(s) (26, 28), prolonging the threadlike bearing portion (74) respectively into the first and second woven or knitted fabric(s) (26, 28).

9. Process according to any one of the preceding claims, in which each first threadlike element (64, 66) is coated directly with a layer of a first adhesion primer and the layer of the first adhesion primer is coated with the layer of the first adhesive composition.

10. Process according to any one of the preceding claims, in which each second threadlike element (68, 70) is coated directly with a layer of a second adhesion primer and the layer of the second adhesion primer is coated with the layer of the second adhesive composition.

11. Process according to any one of the preceding claims, in which, each bearing element (32) being a threadlike bearing element (32):
- each threadlike bearing element (32) is coated with at least one layer of a third adhesive composition,
- each coated threadlike bearing element (32) is then heat treated, so as to crosslink the third adhesive composition,
- each coated and heat-treated threadlike bearing element (32) is then assembled with the first and second coated and heat-treated threadlike elements (64, 66, 68, 70), so as to form the assemblage (24).

12. Process for the manufacture of a tyre (20), **characterized in that** an assemblage (24) or an assembly is wound around a confection cylinder substantially of revolution around an axis of revolution:
- the assemblage (24) comprising:
- a first woven or knitted fabric (26) comprising one or more first threadlike elements (64, 66), each first threadlike element (64, 66) being coated with at least one layer of a first crosslinked adhesive composition,
- a second woven or knitted fabric (28) comprising one or more second threadlike elements (68, 70), each second threadlike element (68, 70) being coated with at least one layer of a second crosslinked adhesive composition,
- a bearing structure (30) comprising bearing elements (32) connecting the first and second woven or knitted fabric(s) (26, 28) together,
The assemblage being capable to be obtained by a process according to any one of the preceding claims,
- the assembly (90) comprising:
- first and second layers (33, 35) respectively of first and second polymeric compositions (34, 36);
- the assemblage (24) in which:
- the first woven or knitted fabric (26) is impregnated, at least in part, with the first polymeric composition (34) and forms a first impregnated woven or knitted structure (25) of the assembly (90);
- the second woven or knitted fabric (28) is impregnated, at least in part, with the second polymeric composition (36) and forms a second impregnated woven or knitted structure (27) of the assembly (90),
- the tyre (20) comprising:
- a first structure of revolution (25') comprising the first woven or knitted fabric (26) and a first layer of a first polymeric composition (34), the first woven or knitted fabric (26) being impregnated, at least in part, with the first polymeric composition;
- a second structure of revolution (27') comprising the second woven or knitted fabric (28) and a second layer of a second polymeric composition (36), the second woven or knitted fabric (28) being impregnated, at least in part, with the second polymeric composition, the second structure of revolution (27') being arranged radially inside the first structure of revolution (25');
- an interior annular space (52) delimited by an internal face (42) of the first structure of revolution (25') and an internal face (46) of the second structure of revolution (27');
- two sidewalls (50) connecting together each axial end (44) of the first, radially exterior, structure of revolution (25') and each axial end (48) of the second structure of revolution (27'), the two sidewalls (50) delimiting the interior annular space (52); the interior annular space (52) forming a closed cavity which can be pressurized by an inflation gas,
- the interior annular space (52) is formed,
- at least one of the first and second woven or knitted fabrics (26, 28) is separated radially with respect to the axis of revolution in order to open out the interior annular space (52).

13. Process according to the preceding claim, in which, in order to form the interior annular space (52), each sidewall (50) is joined to each axial end (44, 48) of the first and second structures of revolution (25', 27'), so as to form the interior annular space (52).

14. Process according to Claim 12 or 13, in which the interior annular space (52) is opened out by pressurization by an inflation gas of the interior annular space (52).

15. Process according to any one of Claims 12 to 14, in which, after the interior annular space (52) has been opened out, a crown structure of revolution (55) is wound radially on the outside of the first structure of revolution (25').
